# EUROPÄISCHE PATENTSCHRIFT

(11) **EP 2 994 770 B1**
(45) Veröffentlichungstag und Bekanntmachung des Hinweises auf die Patenterteilung: **21.06.2023**
(21) Anmeldenummer: 14721876.2
(22) Anmeldetag: 06.05.2014
(51) Int. Cl.: G01S 5/02

(54) **VERFAHREN UND VORRICHTUNGEN ZUM BESTIMMEN DER POSITION EINER BEWEGLICHEN KOMMUNIKATIONSEINRICHTUNG**
METHOD AND APPARATUSES FOR DETERMINING THE POSITION OF A MOVABLE COMMUNICATION DEVICE
PROCÉDÉ ET DISPOSITIFS DE DÉTERMINATION DE LA POSITION D'UN SYSTÈME DE COMMUNICATION MOBILE

(30) Priorität: 07.05.2013 DE 102013104727
(43) Veröffentlichungstag der Anmeldung: 16.03.2016
(73) Patentinhaber: Deutsche Telekom AG, 53113 Bonn (DE)
(72) Erfinder: WITYCH, Michael, 53227 Bonn (DE)
(74) Vertreter: Blumbach · Zinngrebe Patentanwälte PartG mbB
(86) Internationale Anmeldenummer: PCT/EP2014/059236
(87) Internationale Veröffentlichungsnummer: WO 2014/180845

(56) Entgegenhaltungen:
- EP-A2- 1 617 601
- WO-A1-2009/120146
- WO-A1-2010/129589
- MOHAMED YOUSSEF: "A Cross-Layer Design for Wireless Location", 20090101 , 1 January 2009 (2009-01-01), page Complete, XP008156989, Retrieved from the Internet: URL:http://search.proquest.com/pqdtscieng/ docview/847546949/139A621482E57233B2B/1?ac countid=29404 [retrieved on 2021-06-01]

## Beschreibung

Die Erfindung betrifft ein Verfahren zum Verbessern der Position wenigstens einer beweglichen Kommunikationseinrichtung eines drahtlosen Kommunikationsnetzes, eine bewegliche Kommunikationseinrichtung zum Einsatz in einem drahtlosen Kommunikationsnetz, eine zentrale, drahtlose Kommunikationseinrichtung zum Verbessern der Position wenigstens einer beweglichen Kommunikationseinrichtung sowie ein Computerprogramm.

Auf dem Markt sind Mobilfunktelefone, insbesondere sogenannte Smartphones, erhältlich, die die Positionsbestimmung des Smartphones durchführen können und hierzu unter anderem einen GPS-Empfänger enthalten. Mit Hilfe eines GPS-Empfängers kann die Position des Smartphones berechnet und gegebenenfalls auf einem Display angezeigt werden. Um die Positionsbestimmung mittels des GPS-Empfängers zu verbessern, kann ein DGPS (Differential Global Positioning System)-System eingesetzt werden, welches mindestens einen ortsfesten GPS-Empfänger aufweist. Die ortsfesten GPS-Empfänger ermöglichen die Ermittlung von Korrektursignalen für den GPS-Empfänger des Smartphones wobei hierzu eine Übertragung von Daten zum Smartphone erfolgt.

Aus der DE 601 10 052 T2 ist ein System zur drahtlosen Datenübertragung bekannt, welches zum Schätzen der Position eines Gerätes verwendet werden kann. Hierzu überträgt wenigstens ein Slave seine Position zu einem Master, der die Entfernung zwischen dem Slave bekannter Position und sich selbst abschätzen kann. Der Master benutzt dann die aktuelle Position des Slaves sowie die Information über die geschätzte Entfernung zwischen dem Slave und dem Master, um seine aktuelle Position abschätzen zu können. Die Abschätzung kann mit Hilfe der Fuzzy-Logik durchgeführt werden.

Aus der US 2012/0184287 A1 ist ein Verfahren zum Betreiben einer ersten mobilen Kommunikationseinrichtung bekannt, um die Position der ersten mobilen Kommunikationseinrichtung zu bestimmen. Die Position wird aus einer Positionshistorie einer zweiten mobilen Kommunikationseinrichtung und einem Messsignal bestimmt.

Aus der WO 2010/129589 A1 ist ein Verfahren bekannt, bei dem Schätzwerte der absoluten Positionen und Abstandsschätzwerte benutzt werden, um die Position einer mobilen Einrichtung zu bestimmen, wobei die mobile Einrichtung mit weiteren Partner-Einrichtungen positions- und abstandsbezogene Informationen austauschen kann, wobei wenigstens drei Partner-Einrichtungen eine Partnerschaft bilden. Hierzu startet zunächst jede Einrichtung eine Prozedur zum Schätzen einer absoluten Position. Anschließend bestimmt jede Einrichtung eine relative Position, indem ein Trilaterations- oder ein Multi-Trilaterationsverfahren angewandt wird.

Aus der Dissertation mit dem Titel "A Cross-layer Design for Wireless Location" von Mohamed Youssef, University of Calgary, 2008 (doi:10.11575/PRISM/2992), sind robuste schichtenübergreifende Lösungen für bestehende drahtlose Ortungsprobleme sowohl für Infrastruktursysteme als auch für verteilte Systeme bekannt.

Der Erfindung liegt die Aufgabe zugrunde, eine Maßnahme bereitzustellen, die es ermöglicht, die mittels GPS-Empfänger bestimmte aktuelle Position einer beweglichen Kommunikationseinrichtung eines drahtlosen Kommunikationsnetzes zu verbessern.

Die Aufgabe wird durch die Merkmale der unabhängigen Ansprüche gelöst. Vorteilhafte Ausführungsformen sind Gegenstand der abhängigen Ansprüche.

Zunächst sei angemerkt, dass mit dem Begriff "bewegliche Kommunikationseinrichtung" mobile, drahtlose Kommunikationseinrichtungen wie zum Beispiel Mobilfunktelefone, Smartphones, PDAs und dergleichen erfasst werden.

Ein Gesichtspunkt der Erfindung kann darin gesehen werden, dass zur Bestimmung der Position einer beweglichen Kommunikationseinrichtung Positionsinformationen, das sind die Position und auch die Genauigkeit der Position, wenigstens zweier weiterer beweglicher Kommunikationseinrichtungen und ggf. einer statischen Kommunikationseinrichtung sowie wenigstens ein Beobachtungswert, der die relative Lage zwischen den wenigstens zwei Kommunikationseinrichtungen definiert, verwendet werden.

Bei beweglichen Kommunikationseinrichtungen, wie zum Beispiel einem Smartphone, kann man in der Regel davon ausgehen, dass, wenn sie bewegt werden, ihre Position nicht exakt, d. h. nicht fehlerfrei, bekannt ist und somit zum Beispiel die Standardabweichung einer Koordinate somit nicht zu Null wird. Wenn ihre Position während oder nach der Bewegung bekannt ist, dann ist diese stochastisch definiert, also nicht fehlerfrei bekannt und ihre Koordinaten besitzen dann zum Beispiel Standardabweichungen größer als Null. Existieren sehr gute Positionsbestimmungen für bewegliche Kommunikationseinrichtungen, so kann man unter bewusster Aufgabe der Strenge eines

Ausgleichungsmodells diese im weiteren Auswertungsprozess auch als fehlerfreie Positionen nutzen, also als Festlegung unter Zwang, sofern die Vernachlässigung der Strenge abgeschätzt und toleriert werden kann.

Statische Kommunikationseinrichtungen, wie z. B. ein Wi-Fi Zugangspunkt, liegen im Vergleich mit beweglichen Kommunikationseinrichtungen in der Regel in ihrer Position als hochgenau bestimmt vor, wodurch diese statische Einrichtungen unter Aufgabe der Strenge eines Ausgleichungsmodells oft als fehlerfreie Positionen durch Formulierung eines algebraischen Zwanges genutzt werden. Eine statische Kommunikationseinrichtung kann aber auch als stochastisch definierte Position im Netzausgleichungsprozess behandelt werden und dadurch auch Korrekturen durch die Ausgleichung erhalten oder in ihren Werten zum Beispiel mittels eines statistischen Hypothesentests überprüft werden.

Im Ausgleichungsprozess können auch stochastisch definierte Positionen, die entweder aus genäherten Berechnungen zum im Wesentlichen gleichen Zeitpunkt bestimmt sind oder aus zu einem früheren Zeitpunkt geltenden Messungen bestimmt sind, als spezielle Beobachtungen genutzt werden, wobei diese stochastisch definierten Positionen im Ausgleichungsprozess auch eine Verbesserung erhalten können. Dieses ist dem geodätischen Fachmann bekannt.

Ist eine der Kommunikationseinrichtungen beweglich, so ist in der Regel der Zeitpunkt einer Messung von und zu einer solchen Kommunikationseinrichtung von Bedeutung, um in einer Netzausgleichung alle Größen auf einen einzigen Zeitpunkt beziehen zu können, um damit temporär ein geometrisches Lagenetz einer gemeinsamen Momentaufnahme zu definieren. Dieses ist dem geodätischen Fachmann bekannt.

Das Lagenetz umfasst alle Koordinatenrichtungen, so auch die Höhe eines 3-dimensionalen Netzes.

Liegen Unterschiede in den Zeitpunkten der Bestimmung einzelner Eingabegrößen einer Netzausgleichung vor, so kann die Auswirkung abgeschätzt werden und entweder toleriert oder durch Anbringung von Korrekturen an den Absolutwerten der Eingangswerte und/oder deren Genauigkeiten mindestens teilweise korrigiert werden. Dieses ist dem geodätischen Fachmann bekannt.

Gemäß einem weiteren Aspekt der Erfindung wird die Position wenigstens einer beweglichen Kommunikationseinrichtung und auch die Positionsgenauigkeit unter Anwendung einer Netzausgleichung bestimmt, wobei die aus der Geodäsie bekannten mathematischen Modelle und Bestimmungsgleichungen als Grundlage dienen können.

Zur Ausgleichung eines geometrischen Netzes, welches unter Anderem koordinatensystemabhängige Elemente aufweist, wird die Definition eines Koordinatensystem benötigt, in dem der Bezug der koordinatensystemabhängigen Größen definiert ist. Diese Definition erfolgt zum Beispiel durch die Festlegung der Koordinaten des Ursprungs, der Richtung der 3 Koordinatenachsen und eines gemeinsamen Maßstabes. Diese Festlegung kann in unterschiedlicher Art und Weise bewirkt werden und zum Beispiel auch durch fehlerfreie und/oder statistisch basierte Vorgaben realisiert werden und/oder durch algebraische spezielle Restriktionen zur Festlegungen einer freien Netzausgleichung realisiert werden. Dieses ist dem geodätischen Fachmann bekannt.

Wie die Festlegung im Einzelfall erfolgen soll, hängt unter anderem von den bekannten Zusammenhängen ab wie:
- Welche und wie gute Informationen liegen vor und wie gut kontrollieren sich diese Informationen gegenseitig?
- Wird als Zielkoordinatensystem ein absolut definiertes Koordinatensystem benötigt oder reicht ein beliebiges Berechnungskoordinatensystem zur Darstellung relativer ausgeglichener Zielgrößen aus?

Die Güte der vorliegenden Informationen und die Frage des Zielkoordinatensystems hat auch eine Auswirkung darauf, ob man eine Netzausgleichung in einem freien Netz durchführt, dessen Festlegung keinen negativen Einfluss auf die statistisch basierte Suche nach grob fehlerhaften Eingabefehlern hat, also der Suche nach Ausreißern. Dieses ist dem geodätischen Fachmann bekannt.

Ein Koordinatensystem für die Netzausgleichung wird dadurch als nicht reines Berechnungskoordinatensystem eines freien Netz festgelegt, dass die Eingabegrößen, die in der Ausgleichung algebraisch von den Koordinaten des Ausgleichungskoordinatensystems abhängig sind, durch eine ausreichende Anzahl dieser Koordinaten im Ausgleichungsprozess vorgegeben werden, zum Beispiel als fehlerfreie Größen unter Zwang oder als stochastisch definierte Größen, wie zum Beispiel eine Koordinate und deren Standardabweichung. Eine Netzausgleichung kann auch in einem Koordinatensystem durchgeführt werden, das ein teilweise freies Netz ist, also in welchem nicht alle Koordinatensystemparameter durch die Regeln des freien Netzes bestimmt werden, so zum Beispiel wenn die Höhen der Punkte fehlerfrei bekannt sein sollen, aber die Koordinaten der Horizontalebene in einem freien Netz ausgeglichen werden. Dieses ist dem geodätischen Fachmann bekannt.

Durch die Vorgabe von Koordinaten und/oder Funktionen von Koordinaten unter Zwang und/oder stochastisch können freie, teilfreie und unter Zwang oder stochastisch definierte Netzausgleichungen und deren Berechnungskoordinatensysteme in unterschiedlichen Kombinationen per algebraischer Definitionen erzeugt werden. Dieses ist dem geodätischen Fachmann bekannt.

Liegen die zu bestimmenden Koordinatenunbekannten in einem geometrischen Netz vor, so bedarf es bei der freien Netzausgleichung einer höheren Anzahl an Unbekannten in der Gleichungslösung und somit eines erhöhten Rechenaufwands bei der Auswertung. Dieses ist dem geodätischen Fachmann bekannt.

Für das Verfahren der Erfindung, dass in einem Aspekt auch auf der Verbesserung der Koordinaten und deren Standardabweichungen einer Kommunikationseinrichtung durch Nutzung von zusätzlichen Beobachtungen zu anderen Kommunikationseinrichtungen im Wesentlichen zum gleichen Zeitpunkt wie der Gültigkeitszeitpunkt der bereits vorliegenden Position beruht, ist das bisher Gesagte zu Netzausgleichungen und hier insbesondere der stochastischen Definition des Koordinatensystems durch stochastisch definierte Koordinaten, den vorliegenden Koordinaten und deren Standardabweichungen, wichtig, um den Algorithmus des Verfahren zu verstehen. Liegt keine geeignete Vorinformation, zum Beispiel keine vorherige Ausgleichung und keine Messungen zu unter Zwang oder stochastisch bekannten Zielen vor, so kann ein freies Netz als Ausgleichungsform genutzt werden. Dieses ist dem geodätischen Fachmann bekannt.

Liegen mehrere im Wesentlichen zum gleichen Zeitpunkt gültige Ausgleichungsergebnisse von überlappenden geometrischen Netzen vor, also zum Beispiel mit gemeinsamen beweglichen Kommunikationseinrichtungen, so können diese unterschiedlichen Netzausgleichungsergebnisse zusätzlich über die bekannten Blockausgleichungen verbessert werden, indem diese Blöcke von geschätzten Punkten unter Berücksichtigung ihrer jeweiligen Varianz-Kovarianz-Matrizen als Nachverarbeitungschritt zum Zwecke der weiteren Verbesserung oder der Überprüfung der Positionen zusammen ausgeglichen werden. Hierdurch erhalten die gemeinsamen Punkte und ebenfalls die nicht gemeinsamen Punkte eine Verbesserung in ihren Koordinaten und deren Genauigkeiten. Relevante Unterschiede im Gültigkeitszeitpunkt können entsprechend wie bei zusätzlichen Beobachtungen mindestens teilweise berücksichtigt werden. Dieses ist dem geodätischen Fachmann bekannt.

Entspricht ein Berechnungskoordinatensystem einer geometrischen Netzausgleichung nicht dem Zielkoordinatensystem, so kann nachträglich das Netz inklusive der Genauigkeiten der Punkte durch Ähnlichkeitstransformationen in ein anderes vorgegebenes Zielkoordinatensystem transformiert werden, sofern dieses nicht bereits in der Erstausgleichung realisiert werden kann. Dieses ist dem geodätischen Fachmann bekannt.

Alles bisher Beschriebene kann bei Vorlage der entsprechenden Informationen in einer mobilen Kommunikationseinrichtung oder einen Server bewertet und entschieden werden und damit insbesondere auch die Entscheidung zur Auswahl der anzuwendenden Art der Netzausgleichung, der Festlegung des Koordinatensystems und der benötigten zusätzlichen Beobachtungen zu anderen Kommunikationseinrichtungen, um eine angestrebte Genauigkeit für die Positionsbestimmung einer mobilen Kommunikationseinrichtung und/oder deren über die Netzgeometrie beteiligten Kommunikationseinrichtungen der Nachbarschaft zu erreichen.

Ein weiterer Gesichtspunkt der Erfindung kann darin gesehen werden, dass mehrere bewegliche Kommunikationseinrichtungen und gegebenenfalls wenigstens eine statische Kommunikationseinrichtung temporär als stabile Lagepunkte eines geometrischen Netzwerkes betrachtet werden können, wobei die Verbindungslinien der Punkte als symbolisierte Messungen zwischen den Kommunikationseinrichtungen betrachtet werden können. Alle Messungen und Positionsberechnungen werden auf den einen Punkt einer Kommunikationseinrichtung bezogen, die die Position der Kommunikationseinrichtung definiert.

Begrifflich geht man in der Regel davon aus, dass die Positionen der beweglichen Kommunikationseinrichtungen vor der Schätzung, wenn überhaupt, dann nur näherungsweise bekannt sind und durch die Schätzung verbessert werden sollen. Entsprechend geht man begrifflich in der Regel davon aus, dass die Positionen der statischen Kommunikationseinrichtungen vor der Schätzung ausreichend genau bekannt sind und durch die Schätzung nicht verbessert werden sollen. Bei einer Abweichung von der Regel kann eine bewegliche Kommunikationseinrichtung dann als statische Kommunikationseinrichtung betrachtet werden und umgekehrt kann auch eine statische als eine bewegliche in ihrer Position erstmalig zu bestimmende oder zu verbessernde Kommunikationseinrichtung betrachtet werden. Das Auswerteprogramm kann hierüber vorab an Hand von Kriterien entscheiden.

Gemäß einem weiteren vorteilhaften Aspekt können wenigstens drei Kommunikationseinrichtungen, unter denen wenigstens eine bewegliche Kommunikationseinrichtung ist, temporär als stabile Lagepunkte eines geometrischen Netzwerkes betrachtet werden, das mit dem Verfahren der Netzausgleichung ausgeglichen wird.

Die Netzausgleichung dient insbesondere dazu, neben den Positionskoordinaten auch deren Genauigkeit, d.h. zum Beispiel deren Standardabweichung zu bestimmen.

Ein weiterer Aspekt kann darin gesehen werden, dass es sich bei den beweglichen Kommunikationseinrichtungen um GNSSfähige Kommunikationseinrichtungen (Global Navigation Satellite Systems) handeln kann, welche jeweils ihre eigene Position bestimmen können. Hierzu kann beispielsweise auch ein Bewegungssensors der Kommunikationseinrichtung über eine Koppelortung beitragen. Diese Positionswerte sowie Beobachtungswerte können zum Beispiel mittels des Wi-Fi Direct-Kommunikationsprotokolls oder des LTE-Direct-Kommunikationsprotokolls zwischen ausgewählten beweglichen Kommunikationseinrichtungen ausgetauscht und in einer Netzausgleichung verwendet werden, um die Positionsbestimmung zu verbessern.

Die Erfindung wird nachfolgend anhand mehrerer Ausführungsbeispiele in Verbindung mit den Zeichnungen näher erläutert. Es zeigen:
- Fig. 1: eine bewegliche Kommunikationseinrichtung, in welcher die Erfindung verwirklicht ist,
- Fig. 2: eine zentrale Kommunikationseinrichtung, in welcher die Erfindung verwirklicht ist,
- Fig. 3: ein beispielhaftes drahtloses Kommunikationsnetz mit vier beweglichen Kommunikationseinrichtungen,
- Fig. 4: ein alternatives drahtloses Kommunikationsnetz mit drei als statische Kommunikationseinrichtungen behandelte bewegliche Kommunikationseinrichtungen und einer beweglichen Kommunikationseinrichtung,
- Fig. 5: ein weiteres alternatives drahtloses Kommunikationsnetz mit einer bewegliche Kommunikationseinrichtung, die zwischenzeitlich als statische Kommunikationseinrichtung behandelt wird und einer statischen Kommunikationseinrichtung, welche eine Nahfeldkommunikation nutzen, und drei weiteren beweglichen Kommunikationseinrichtungen,
- Fig. 6: eine bewegliche Kommunikationseinrichtung und eine statische Kommunikationseinrichtung, welche eine Nahfeldkommunikation nutzen,
- Fig. 7: ein weiteres alternatives drahtloses Kommunikationsnetz mit neun beweglichen Kommunikationseinrichtungen.

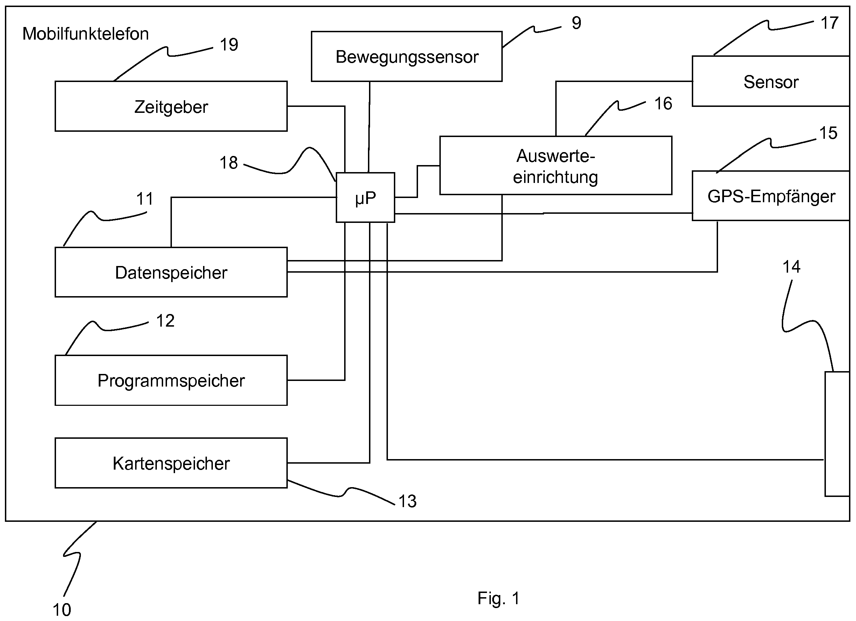

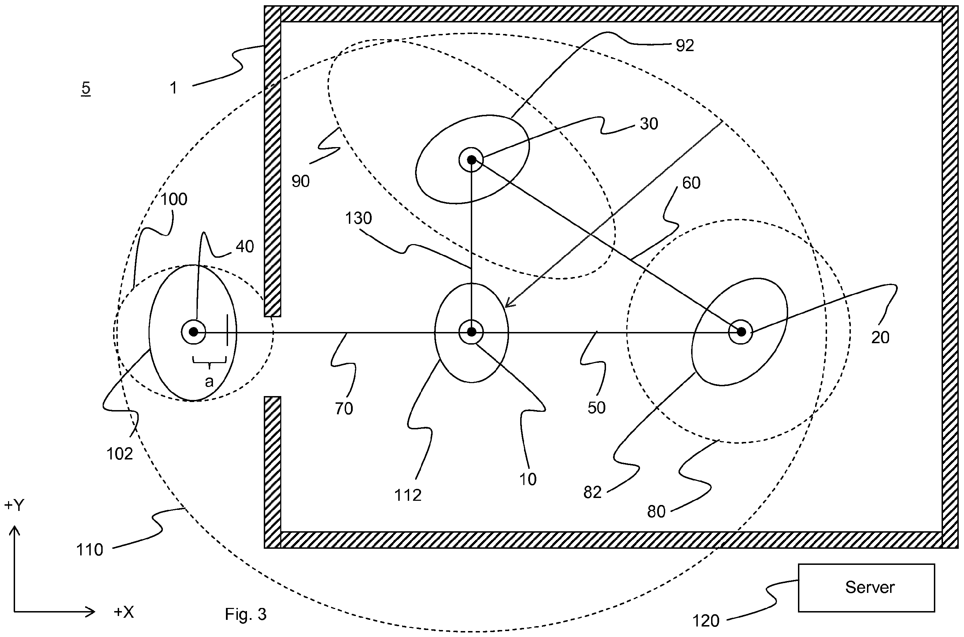

Fig. 1 zeigt als eine beispielhafte bewegliche Kommunikationseinrichtung 10 ein Mobilfunktelefon, insbesondere ein Smartphone. Das Smartphone 10 kann zum Einsatz in einem drahtlosen Kommunikationsnetz eingesetzt werden, wie es ausschnittsweise in den Figuren 3 bis 5 und 7 dargestellt ist.

Das Smartphone 10 weist eine drahtlose Datenkommunikationsschnittstelle 14 auf, über die es mit anderen beweglichen und/oder statischen Kommunikationseinrichtungen Daten austauschen kann. Bei der Schnittstelle 14 kann es sich um eine Wi-Fi Direct-fähige oder LTE Direct-fähige Schnittstelle handeln (LTE: Long Term Evolution). Wie nachfolgend noch detailliert erläutert wird, kann das Smartphone 10 über die Datenkommunikationsschnittstelle 14 unter Anderem die Positionsinformationen wenigstens einer anderen beweglichen Kommunikationseinrichtung und/oder wenigstens einer statischen Kommunikationseinrichtung empfangen. Eine solche Positionsinformation, die die jeweilige Kommunikationseinrichtung beispielsweise mittels eines GPS-Empfängers selbst erzeugen kann, enthält zum Beispiel Angaben über wenigstens eine Positionskoordinate, deren Genauigkeit und gegebenenfalls über einen Gültigkeitszeitpunkt.

Das Smartphone 10 weist ferner eine Speichereinrichtung 11 auf, welche als Datenspeicher bezeichnet wird. In dem Datenspeicher 11 können eigene Positionsinformationen und/oder Positionsinformationen anderer Kommunikationseinrichtungen und wenigstens ein Beobachtungswert abgelegt werden, der die relative Lage zwischen zwei Kommunikationseinrichtungen definiert. Solche Positionsinformationen können wenigstens eine Positionskoordinate, deren Genauigkeit und vorzugsweise einen Gültigkeitszeitpunkt enthalten. Anstelle eines Gültigkeitszeitpunkts kann eine Positionsinformation Angaben enthalten, die dazu verwendet werden können, mit Hilfe einer Interpolation oder Extrapolation aus vorangegangenen Positionsinformationen und/oder Beobachtungswerten einen geeigneten Gültigkeitszeitpunkt zu ermitteln.

Weiterhin weist das Smartphone 10 einen als programmierbare Steuereinrichtung ausgebildeten Mikroprozessor 18 auf. Der Mikroprozessor 18 ist dazu ausgebildet, die Positionskoordinaten des Smartphones 10 sowie die Genauigkeit dieser Positionskoordinaten in Abhängigkeit von wenigstens einem Beobachtungswert und der Positionsinformation wenigstens einer anderen Kommunikationseinrichtung zu bestimmen. Der Mikroprozessor ist auch dazu ausgebildet die Kommunikation mit den anderen Kommunikationseinrichtungen zum Zwecke der Netzausgleichung mit Beteiligung der Kommunikationseinrichtung 10 zu steuern, wozu er die Anweisungen eines im Programmspeicher 12 abgelegten Computerprogramms ausführt.

Das Smartphone 10 kann wenigstens eine in der Fig. 1 als Sensor bezeichnete Messeinrichtung 17 zum Messen einer Messgröße enthalten, die einen Beitrag zur Bestimmung eines Beobachtungswertes liefert. Bei der Messeinrichtung 17 kann es sich um bekannte Sensoren handeln, die vorzugsweise zum Messen eines Abstands, eines Winkels oder einer Richtung zu einer anderen Kommunikationseinrichtung ausgebildet sind. Denkbar ist, dass der Sensor 17 zum Messen eines Winkels zwischen zwei Kommunikationseinrichtungen, die sich in der Nachbarschaft zum Smartphone 10 befinden, ausgebildet ist. Beispielsweise kann der Sensor 17 auch die Signalstärke des Sendesignals einer anderen Kommunikationseinrichtung messen.

Das vom Sensor 17 erzeugte Messsignal wird beispielsweise einer separaten Auswerteeinrichtung 16 zugeführt. Alternativ können Sensor 17 und Auswerteeinrichtung 16 auch eine einzige Baukomponente bilden. Die Auswerteeinrichtung 16 ist dazu ausgebildet, in Abhängigkeit vom empfangenen Messsignal den entsprechenden Beobachtungswert zu bestimmen, der die relative Lage zwischen dem Smartphone 10 und einer weiteren Kommunikationseinrichtung (nicht dargestellt), oder zwischen zwei weiteren Kommunikationseinrichtungen definiert.

Um seine Position selbst bestimmen zu können, weist das Smartphone 10 einen GNSS (Global Navigation Satellite System)-fähigen Empfänger auf, der im vorliegenden Beispiel ein herkömmlicher GPS-Empfänger 15 ist. Der GPS-Empfänger 15 ist zum Empfangen und Auswerten von Positionssignalen eines Satellitensystems ausgebildet. Aus den Positionssignalen wird eine Positionsinformation gewonnen, die die Positionskoordinaten des Smartphones 10, die Genauigkeit dieser Positionskoordinaten und vorzugsweise noch einen Gültigkeitszeitpunkt enthält. Die Genauigkeit liegt in der Regel als Standardabweichung vor.

Um Lücken in den GPS-Signalen zu überbrücken, kann das Smartphone auch einen Bewegungssensor 9 enthalten, der z. B. relative Positionsänderungen kurzzeitstabil erfasst, ohne hierzu Messungen zu anderen Kommunikationseinrichtungen durchzuführen. GPS-Empfänger 15 und Sensor 9 realisieren zusammen dann durch gemeinsame Verarbeitung ihrer Daten, welche vom Mikroprozessor 18 ausgeführt wird, eine Koppelortung.

Das Smartphone 10 weist eine weitere Speichereinrichtung 12 auf, die in Fig. 1 als Programmspeicher bezeichnet wird. In dem Programmspeicher 12 wird wenigstens ein Optimierungsalgorithmus zum Schätzen von Positionskoordinaten und deren Genauigkeit und vorzugsweise zum Bestimmen eines Gültigkeitszeitpunktes abgelegt. Bereits an dieser Stelle sei erwähnt, dass in dem Programmspeicher 12 ein Optimierungsalgorithmus zum Durchführen einer freien Netzausgleichung und ein Optimierungsalgorithmus zum Durchführen einer Netzausgleichung unter Verwendung eines vorbestimmten, zum Beispiel a priori bekannten Koordinatensystems abgelegt sind. Der Mikroprozessor 18 ist dazu ausgebildet, den Optimierungsalgorithmus zum Durchführen einer freien Netzausgleichung aufzurufen und auszuführen, um seine mittels des GPS-Empfängers ermittelte Position zu verbessern. Je nach Anwendungsfall können die Optimierungsalgorithmen Gleichungssysteme enthalten, welche auf einem statistischen Modell, insbesondere einem Gauß-Markov-Modell oder einem heuristischen Modell basieren. Solche Gleichungssysteme und Modelle sind hinlänglich bekannt. Vorzugsweise beruhen die Optimierungsalgorithmen bzw. die Netzausgleichungen auf der bekannten Methode der kleinsten Fehlerquadrate. Als unbekannte zu bestimmende Größen können bei der Netzausgleichung die Positionskoordinaten und deren Genauigkeit des Smartphones 10 verwendet werden, wozu ein gemeinsamer Gültigkeitszeitpunkt für diese zu bestimmenden Größen und für wenigstens einen gemessenen Beobachtungswert sowie gegebenenfalls die Positionskoordinaten und deren Genauigkeit anderer Kommunikationseinrichtungen verwendet wird.

Der Mikroprozessor 18 kann dazu ausgebildet sein, die im Programmspeicher 12 hinterlegten Optimierungsalgorithmen, wenn erforderlich, mehrmals auszuführen und anschließend in Abhängigkeit davon eine zusätzliche Koordinatensystemtransformation der Positionsinformation in ein anderes vorgegebenes Zielkoordinatensystem durchzuführen oder eine Blockausgleichung von sich teilweise oder komplett überlappenden, aber bereits vorausgeglichenen geometrischen Netzen vorzunehmen, um die Positionsinformationen zu verbessern oder zu überprüfen. Hierzu können die notwendigen Daten aus dem Datenspeicher 11 und aus einer Datenübermittlung über die Kommunikationsschnittstelle 14 verwendet werden.

Die Computerprogramme zur Blockausgleichung und zur Koordinatensystemtransformation können ebenfalls vorzugsweise im Programmspeicher 12 abgelegt sein.

Eine weitere Speichereinrichtung 13 kann im Smartphone 10 vorgesehen sein, um eine elektronische geographische Karte abzuspeichern, die navigierbare Elemente enthält. Die navigierbaren Objekte dieser geografischen Karte ermöglichen einem Computerprogramm Navigationsanweisungen zu ermitteln, die die Navigation von einem Objekt zu einem anderen Objekt auch über andere Objekte erlauben, wobei die Objekte Punkt-Objekte und/oder räumliche Objekte sein können.

Neben der beispielhaften Wi-Fi Direct-fähigen oder LTE Direct-fähigen Datenkommunikationsschnittstelle 14 können weitere Kommunikationsschnittstellen, wie zum Beispiel Schnittstellen gemäß dem BlueTooth-Standard, oder Nahfeld-Kommunikationsschnittstellen (NFC-Interface, Near Field Communication IF), wie zum Beispiel NFC RFID (NFC Radio Frequency Identification)-fähige Schnittstellen, im Smartphone 10 implementiert sein.

Ferner kann das Smartphone 10 einen Zeitgeber 19 aufweisen. Der Zeitgeber 19 kann dazu dienen, zu einem vorbestimmten Gültigkeitszeitpunkt den Mikroprozessor 18 anzustoßen, den Sensor 17 und den GPS-Empfänger 15 und den Sensor 9 zu aktivieren, um einen Beobachtungswert und/oder die Position des Smartphones zu bestimmen. Zudem kann der Mikroprozessor 18 dazu ausgebildet sein, unter Ansprechen auf den vom Zeitgeber 19 gelieferten Gültigkeitszeitpunkt einen der gespeicherten Optimierungsalgorithmen aufzurufen und auszuführen.

Zudem kann der Mikroprozessor 18 dazu ausgebildet sein, zur Ermöglichung der Netzausgleichung durch die

Optimierungsalgorithmen vorab die Aktionen zu starten, die die geeigneten Kommunikationseinrichtungen der Umgebung erkennen, deren Positionsinformationen auszulesen und Messungen zwischen den Kommunikationseinrichtungen durchführen zu lassen, sowie diese an die Kommunikationseinrichtung 10 übertragen zu lassen.

Zudem kann der Mikroprozessor 18 dazu ausgebildet sein, unter Ansprechen auf den vom Zeitgeber 19 gelieferten Gültigkeitszeitpunkt eine Blockausgleichung durchzuführen oder eine Ähnlichkeitstransformation in ein Zielkoordinatensystem durchzuführen.

In dem Fall der ausgeführten Netzausgleichung kann der Mikroprozesor 18 dazu ausgebildet sein, die Positionskoordinaten des Smartphones 10 und gegebenenfalls die Positionskoordinaten der wenigstens zwei anderen Kommunikationseinrichtungen sowie die jeweilige Genauigkeit dieser Positionskoordinaten und einen Gültigkeitszeitpunkt zu bestimmen.

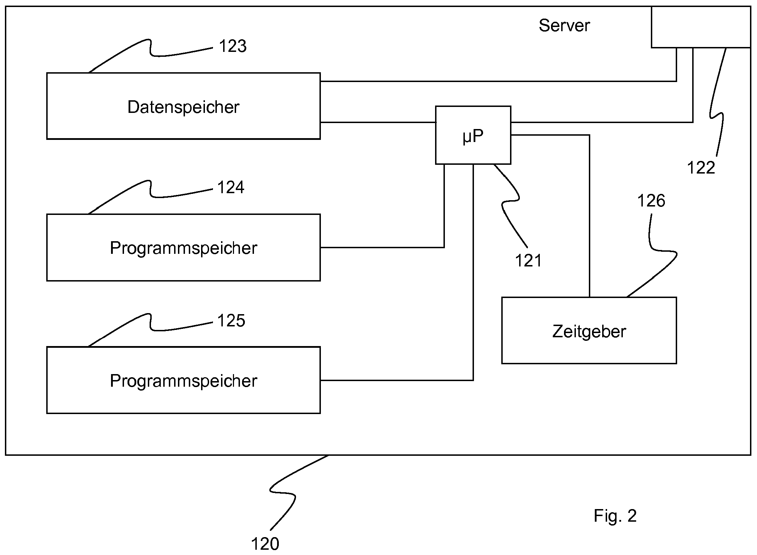

Fig. 2 zeigt als zentrale, drahtlose Kommunikationseinrichtung 120 einen Server, der eine drahtlose Datenkommunikationsschnittstelle 122 aufweist, welche z. B. gemäß dem Wi-Fi Direct-Standardprotokoll oder dem LTE Direct-Standardprotokoll ausgebildet ist. Über die drahtlose Datenkommunikationsschnittstelle 122 kann der Server 120 mit dem Smartphone 10 und beispielsweise mit den in Fig. 3 gezeigten beweglichen Kommunikationseinrichtungen 20 bis 40 Daten austauschen. Insbesondere kann der Server 120 Positionsinformationen und Beobachtungswerte und deren Gültigkeitszeitpunkte von anderen Kommunikationseinrichtungen empfangen, welche in einem Datenspeicher 123 abgelegt werden können. In einem Programmspeicher 124 kann ein Optimierungsalgorithmus basierend auf einer freien geometrischen Netzausgleichung zum Schätzen der Positionskoordinaten einer beweglichen, drahtlosen Kommunikationseinrichtung abgelegt werden. Ein weiterer Programmspeicher 125 kann vorgesehen sein, in welchem ein Optimierungsalgorithmus zum Schätzen von Positionskoordinaten abgelegt werden kann, der auf einer geometrischen Netzausgleichung unter Verwendung eines wenigstens teilweise unter Zwang oder stochastisch vorbestimmten Koordinatensystems beruht. In einem der Programmspeicher 124 oder 125 kann ebenfalls ein Algorithmus abgelegt sein, der eine Transformation der Ergebnisse einer Netzausgleichung in ein anderes vorgegebenes Zielkoordinatensystem durchführt und/oder eine Blockausgleichung mehrerer sich auch nur teilweise überlappender geometrischer Netze durchführt. Im Server 120 ist eine programmierbare Steuereinrichtung 121, beispielsweise ein Mikroprozessor 121, implementiert, der auf die Programmspeicher 124 und 125 zugreifen kann, um einen Optimierungsalgorithmus zum Schätzen der Positionskoordinaten einer beweglichen, drahtlosen Kommunikationseinrichtung und der Genauigkeit dieser Positionskoordinaten auszuführen. Weiterhin kann im Server 120 ein Zeitgeber 126 vorgesehen sein, der unter Anderem dazu ausgebildet ist, den Mikroprozessor 121 zu einem vorbestimmten Gültigkeitszeitpunkt anzustoßen, eine Netzausgleichung zur Bestimmung der Position einer bewegliche Kommunikationseinrichtung auszuführen und diese gegebenenfalls nachträglich in ein gegebenes Zielkoordinatensystem transformiert und/oder eine Blockausgleichung durchführt.

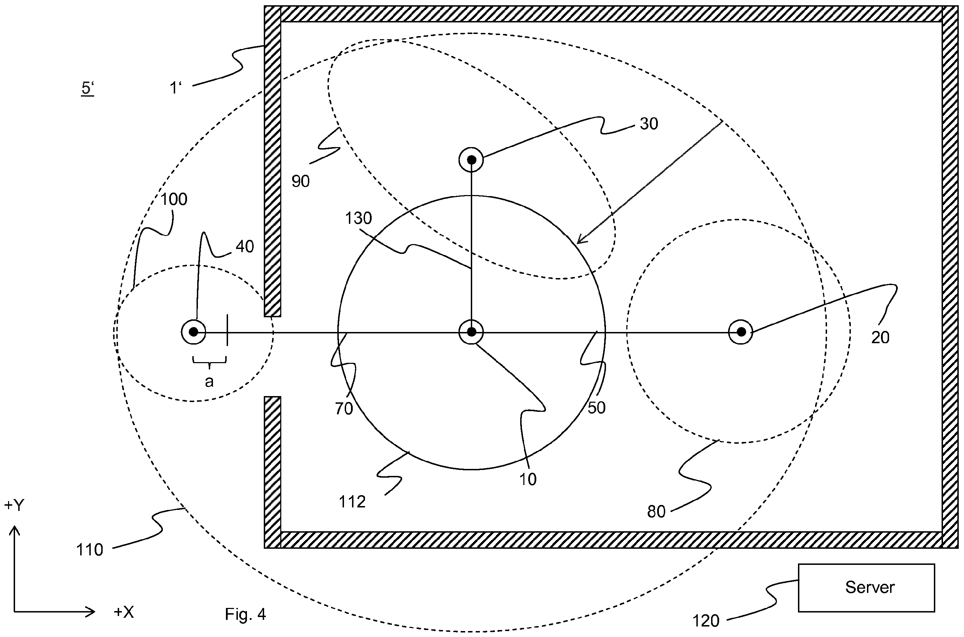

Fig. 3 zeigt ein erstes Szenario. Ausschnittsweise ist ein beispielhaftes, drahtloses Kommunikationsnetz 5 gezeigt, innerhalb dessen vier mobile Kommunikationseinrichtungen 10, 20, 30 und 40 temporär eine Gruppe bilden. Diese temporäre Gruppe kann als ein temporär stabiles geometrisches Lagenetz mit vier Punkten betrachtet werden, welche durch die vier beweglichen Kommunikationseinrichtungen dargestellt werden. Vereinfacht sei angenommen, dass alle Z-Koordinaten identisch und fehlerfrei bekannt sind und die Streckenmessungen sich somit nur auf den Abstand in der x-y-Ebene beziehen. 3-dimensionale Betrachtungen sind hieraus einfach ableitbar, da aus den Betrachtungen von 2 nichtparallelen Ebenen die 3-dimensionale Betrachtung eindeutig folgt. Diese Betrachtungsweise gelte auch für alle weiteren Szenarien der Figuren Fig. 4, 5 und 7.

Die Funktionsweise des in Fig. 3 dargestellten drahtlosen Kommunikationsnetzes 5 wird nunmehr detailliert beschrieben.

Folgende beispielhafte Annahmen werden getroffen:
1. Alle vier beweglichen Kommunikationseinrichtungen 10 bis 40 sind Smartphones, die im Aufbau und in ihrer Funktionsweise dem in Fig. 1 gezeigten Smartphone 10 ähneln.
2. Die Smartphones 10 bis 40 befinden sich auf einem Messegelände mit mehreren Hallen und bewegen sich teilweise in einer Halle 1, wobei sich die Smartphones 10 bis 30 in der Halle 1 befinden und nur Smartphone 40 außerhalb der Halle 1 ist.
3. Das Smartphone 10 benötigt bessere Positionskoordinaten.
4. Die Smartphones 10 bis 40 sind Wi-Fi Direct-fähig, so dass die Smartphones 10 bis 40 über das standardisierte Wi-Fi Direct-Protokoll miteinander kommunizieren können.
5. Obwohl sich die Smartphones 10 bis 40 in einem dreidimensionalen Koordinatensystem (mit den Koordinaten x, y und z) bewegen, wird bei der Ausführung der Netzausgleichung zur Positionsbestimmung das Koordinatensystem auf eine Ebene (mit den Koordinaten x und y) reduziert, da angenommen wird, dass sich alle Smartphones 10 bis 40 ausreichend genau in gleicher Höhe befinden. Die Netzausgleichung kann somit auf die Bestimmung der x-y-Koordinaten beschränkt werden.
6. Im Kartenspeicher 13 ist eine elektronische
7. Karte des Messegeländes hinterlegt.

Um zumindest die Positionskoordinaten des Smartphones 10 verbessern und eine zuverlässige Grobfehler-Erkennung durchführen zu können, sind Überbestimmungen hinsichtlich der unbekannten Parameter einer Netzausgleichung erforderlich. Denn in diesem Fall können Messfehler erkannt und in geeigneter Weise verteilt, d. h. ausgeglichen werden oder Beobachtungen als Ausreißer aufgedeckt und eliminiert werden, wie dies hinlänglich bekannt ist.

Demzufolge werden im vorliegenden Ausführungsbeispiel, wie nachfolgend erläutert, bei der Ausführung einer Netzausgleichung als unbekannte Parameter die x-y-Positionskoordinaten der Smartphones 10 bis 40 verwendet.

Es erfolgt nun eine Positionsbestimmung des Smartphones 10 und zeitgleich der anderen Smartphones 20, 30 und 40 mittels Netzausgleichung des Gesamtnetzes, welche im Smartphone 10 ausgeführt wird.

Unter Ansprechen auf ein vorbestimmtes Ereignis wird nunmehr im Smartphone 10 ein Programm gestartet, mit dessen Hilfe versucht wird, die aktuelle Position des Smartphones 10 zu verbessern. Dieses Programm kann im Speicher 12 gespeichert werden. Als Trigger oder Ereignis kann eine manuelle Eingabe des Benutzers am Smartphone 10 ausreichen. Bei dieser Eingabe kann es sich um einen Ort auf dem Messegelände handeln. Der Mikroprozessor 18 kann dazu ausgebildet sein, unter Ansprechen auf die im Speicher 13 hinterlegte digitale Karte und auf den vom Benutzer eingegebenen Ort zu erkennen, ob die aktuelle Messgenauigkeit des GPS-Empfängers 15 in Kombination mit zum Beispiel einer Koppelortung eines internen Bewegungssensors 9 genügt. Wenn nicht, startet der Mikroprozessor 18 das Programm. Denkbar ist auch, dass der Mikroprozessor 18 dazu ausgebildet ist, die Empfangsqualität des GPS-Empfängers 15 zu überwachen und das Programm zu starten, sobald die Empfangsqualität unter einen Schwellwert gesunken ist. Auch ist denkbar, dass der Server 120 das Smartphone 10 auffordert, das Programm zu starten.

Das Smartphone 10 beginnt nunmehr nach Start des Programms seine Umgebung auf bewegliche Kommunikationseinrichtungen abzusuchen, die ihm vielleicht helfen können, seine Positionskoordinaten zu verbessern. Eine Möglichkeit, geeignete bewegliche Kommunikationseinrichtungen zu finden, besteht darin, dass bewegliche Kommunikationseinrichtungen unaufgefordert oder auf Anforderung des Smartphones 10 oder des Servers 120 ihre Positionsinformationen zum Smartphone 10 übertragen. Jede Positionsinformation enthält die Positionskoordinaten und deren Genauigkeit der jeweiligen beweglichen Kommunikationseinrichtung und gegebenenfalls einen Gültigkeitszeitpunkt. Der Mikroprozessor 18 des Smartphones 10 ist dazu ausgebildet, anhand der in den empfangenen Positionsinformationen enthaltenen Genauigkeit abzuschätzen, ob die aktuelle Position des Smartphones 10 verbessert werden kann. Beim vorliegenden Ausführungsbeispiel sei angenommen, dass der Mikroprozessor 18 berechnet hat, dass die von den Smartphones 20, 30 und 40 empfangenen Positionsinformationen zusammen mit den potentiell durchzuführenden im Wesentlichen zeitgleichen Beobachtungen mit bekanntem Genauigkeitsniveau zwischen den Smartphones geeignet sind, eine verbesserte Position zu ermitteln.

Ferner sei angenommen, dass die von den Smartphones 20 bis 40 kommenden Positionsinformationen Angaben enthalten, die signalisieren, dass das jeweilige Smartphone als bewegliche Kommunikationseinrichtung zu betrachten ist, also auch an einer Verbesserung seiner eigenen Positionsgenauigkeit interessiert ist. Unter Ansprechen auf diese Angaben entscheidet der Mikroprozessor 18, dass er den Optimierungsalgorithmus basierend auf einer Netzausgleichung aus dem Speicher 12 aufrufen und ausführen muss und vorab die geeigneten zusätzlichen Streckenmessungen anstoßen muss.

Der Mikroprozessor 18 kann dazu ausgebildet sein, einen Gültigkeitszeitpunkt oder ein Gültigkeitsintervall festzulegen, zu dem alle Eingabegrößen, das sind insbesondere Positionskoordinaten und deren Genauigkeiten und Beobachtungswerte und deren Genauigkeiten, für die Netzausgleichung zur Verfügung gestellt werden. Dieser Gültigkeitszeitpunkt kann vom Smartphone 10 den Smartphones 20 bis 40 zugesandt werden. An dieser Stelle sei angemerkt, dass beliebige Verfahren zur Synchronisation der Bestimmung von Beobachtungswerten und Positionsinformationen zum Einsatz kommen können.

Zudem kann der Mikroprozessor 18 dazu ausgebildet sein, zu veranlassen, dass das Smartphone 10 zum Gültigkeitszeitpunkt seine relative Lage zu den Smartphones 20, 30 und 40 selbst bestimmt und zusätzlich das Smartphone 20 zum Gültigkeitszeitpunkt seinen Abstand zum Smartphone 30 ermittelt. Diese Veranlassung könnte auch der Server 120 auslösen. Hierzu können beispielsweise die Strecken 50, 60, 70 und 130 gemessen werden. Demzufolge misst der Sensor 17 des Smartphones 10 beispielsweise jeweils die empfangene Signalstärke des Smartphones 20, 30 und 40 und bei bekannter ausgesendeter Signalstärke kann hieraus die Streckenlänge berechnet werden, was bekannt ist. Die ausgesendete Signalstärke kann zum Beispiel aufgrund der Kenntnis der Sendeeinrichtung konstant oder als zusätzliche Information auf das Signal aufmodelliert sein. Die Kommunikationseinrichtung 10 kann die Angabe der konstanten Sendestärke zum Beispiel als zusätzliche Kennung der Smartphones 20, 30 und 40 zusätzlich zu deren Positionsinformationen erhalten. In der Auswerteeinrichtung 16 werden die gemessenen Signalstärken in entsprechende Streckenlängen umgerechnet. Auf diese Weise werden die Strecken 50, 130 und 70 und somit die relative Lage des Smartphones 10 zum Smartphone 20, zum Smartphone 30 bzw. zum Smartphone 40 bestimmt. Die gemessenen Streckenlängen werden als Beobachtungswerte und gegebenenfalls zusammen mit dem Gültigkeitszeitpunkt und einem systembedingten Messfehler a, der in Fig. 3 beispielhaft bezüglich des Smartphones 40 eingezeichnet ist, im Datenspeicher 11 abgelegt. In ähnlicher Weise kann das Smartphone 20 die Strecke 60 messen und den Messwert als Beobachtungswert vorzugsweise zusammen mit dem Gültigkeitspunkt und einem systembedingten Messfehler a zum Smartphone 10 übertragen. Dieser Beobachtungswert wird zusammen mit dem Messfehler a und dem Gültigkeitszeitpunkt ebenfalls im Datenspeicher 11 abgelegt.

Die aktuelle Position des Smartphones sei durch die Fehlerellipse 110 stochastisch gegeben. Um diese Position des Smartphones 10 verbessern zu können, ruft der Mikroprozessor 18 nunmehr den auf einer Netzausgleichung mit stochastischer Definition des Berechnungskoordinatensystems basierenden Optimierungsalgorithmus aus dem Programmspeicher 12 auf, liest die Positionsinformationen der Smartphones 10 bis 40 sowie die vier Beobachtungswerte zusammen mit dem Messfehler a aus dem Speicher 11 aus und führt die Netzausgleichung aus. Als Ergebnis der Netzausgleich werden die unbekannten Parameter, das sind die x-y-Positionskoordinaten des Smartphones 10 und die Genauigkeit dieser Positionskoordinaten und, wenn gewünscht, auch die x-y-Positionskoordinaten der Smartphones 20, 30 und 40 sowie die Genauigkeit der jeweiligen Positionskoordinaten bestimmt. Der Mikroprozessor 18 kann dazu ausgebildet sein, die vom GPS-Empfänger 15 und der Koppelortung unter Nutzung des Sensors 9 zum Gültigkeitszeitpunkt ermittelten Positionskoordinaten und deren Genauigkeit mit den vom Optimierungsalgorithmus, d. h. der Netzausgleichung ermittelten Positionskoordinaten des Smartphones 10 und der Genauigkeit dieser Positionskoordinaten zu vergleichen. Sind die mittels der Netzausgleichung ermittelten Positionskoordinaten und deren Genauigkeit besser als die vom GPS-Empfänger 15 und der Koppelortung mit Sensor 9 bereitgestellten Positionsdaten, werden die Positionsdaten der Koppelortung, hier die schlechte Genauigkeit der Fehlerellipse 110, ersetzt durch die Fehlerellipse 112. Die Genauigkeit der Position des Smartphones 10 wird somit verbessert von Ellipse 110 zu Fehlerellipse 112. Zur besseren Vergleichbarkeit der unterschiedlichen Genauigkeiten wurden die Absolutwerte der Positionen aller Smartphones vor und nach der Netzausgleichung identisch beibehalten, was in der Regel aber aufgrund der streuenden realen Einzelfehler nicht zutrifft. Die absoluten Positionen werden entsprechend der zugeordneten Fehlerellipsen statistisch streuen, wenn streuende reale Einzelfehler vorliegen.

Die Netzausgleichung wurde im vorliegenden Fall derart durchgeführt, dass die Positionen und Fehlerellipsen 80, 90, 100 und 110 der Smartphones 10 bis 40 zugleich mit den 4 Streckenbeobachtungen 50, 60, 70 und 130, jeweils mit Standardabweichung a, zusammen ausgeglichen wurden, da die nachträglichen zusätzlichen Streckenbeobachtungen im Wesentlichen zum gleichen Zeitpunkt wie die vorherigen Positionsbestimmungen, definiert durch die Ellipsen 80, 90, 100 und 110, vorliegen. Würde der Zeitpunkt der Streckenbeobachtungen wesentlich später sein, so würden auch die dann im Wesentlichen zu diesem späteren Zeitpunkt vorliegenden Positionsbestimmungen der Smartphones durch den GPS-Empfänger und die Koppelortung verwendet werden, anstatt die Ellipsen 80, 90, 100, 110 zu nutzen. Im vorliegenden Fall werden die Positionsgenauigkeiten nach der Ausgleichung durch die flächenmäßig jeweils kleineren Ellipsen 82, 92, 102 und 112 beschrieben.

Im Sonderfall, dass das Smartphone 10 oder eines der weiteren Smarthones keine GPS- und Koppelortungsbasierte eigene Positionierung durchgeführt hätten, würden deren Ellipsen keinen Beitrag zur Netzausgleichung liefern und die Ellipsen nach der Netzausgleichung würden dann i. d. R. größere Ellipsen sein als die vorliegenden Ellipsen 82, 92, 102 und 112. Zur Definition des 2-dimensionalen ebenen Koordinatensystems sind hier 3 stochastisch definierte Koordinaten in speziellen Lagen zueinander ausreichend, so z. B. ein 2-dimensionaler Vollpasspunkt und eine Koordinate eines weiteren Punktes der nicht identisch zum ersten Punkt ist.

Im weiteren Sonderfall könnte mindestens eines der Smartphones als in ihrer Position nicht stochastisch, sondern unter Zwang mit Standardabweichung Null wenigstens einige Freiheitsgrade eines Berechnungskoordinatensystems unter Zwang festlegen. Dieses könnte auch wissentlich geschehen, obwohl die hierfür genutzten Koordinaten nicht fehlerfrei bekannt sind. Dann hätte man eine Netzausgleichung mit mindestens einem teilweise unter Zwang festgelegten Berechnungskoordinatensystem. Werden wissentlich fehlerbehaftete Koordinaten unter Zwang festgelegt, so erfolgt hierdurch im Mittel für die Genauigkeiten der anderen Koordinaten nach der Netzausgleichung eine schlechtere Genauigkeit der Koordinaten, da die zu Null gesetzten Fehler in die anderen Unbekannten gedrückt werden, was in Fig. 4 tendenziell erkennbar ist, obwohl dort eine Streckenbeobachtung weniger verwendet wird.

Die in der in Fig. 3 vorliegenden Smartphones 20, 30 und 40 und/oder der Server 120 können dazu ausgebildet sein, Anforderungsbefehle zum Smartphone 10 zu übertragen, die den Mikroprozessor 18 veranlassen, bei der Verarbeitung des Optimierungsalgorithmus nicht nur die Positionskoordinaten und deren Genauigkeit des Smartphones 10, sondern auch die Positionskoordinaten und deren Genauigkeit der Smartphones 20 bis 40 zu bestimmen, wozu diese Koordinaten in der Ausgleichung als Unbekannte definiert sein müssen, somit nicht unter Zwang festgelegt sein dürfen und zeitgleich in einem Guss in einem Gleichungssystem bestimmt werden. Je nach Implementierung werden diese Positionskoordinaten und deren Genauigkeit vom Smartphone 10 zu den jeweiligen Smartphone 20, 30 und 40 übertragen. Mit anderen Worten profitieren die Smartphones 20 bis 40 von der im Smartphone 10 durchgeführten Netzausgleichung, da ihre Positionen gleich mit verbessert werden kann.

Eine positive Auswirkung der Durchführung einer Netzausgleichung im Smartphone 10 unter Verwendung einer stochastischen Vordefinition aller Koordinaten durch die gestrichelten Fehlerellipsen 80, 90, 100 und 110 kann grafisch anhand der Fig. 3 erläutert werden. Um jedes Smartphone ist eine gestrichelte Fehlerellipse gezeichnet, die den aktuellen Ungenauigkeitsbereich durch die Fehlerellipse anzeigt, innerhalb dessen die Position des jeweiligen Smartphones mit einer vorgegebenen Wahrscheinlichkeit von ca. 68 % bei normalverteilten Einzelfehlern liegen kann. Diese Fehlerellipsen können in an sich bekannter Weise aus einer GPS- und koppelortungsbasierten Bestimmung berechnet werden. Beispielsweise spiegelt die Fehlerellipse 110 um das Smartphone 10 die aktuelle Genauigkeit des GPS-Empfängers 15 und der Koppelortung mit Sensor 9 wieder. Das Gleiche gilt für die um das Smartphone 20 gezeichnete Fehlerellipse 80, für die um das Smartphone 30 gezeichnete Fehlerellipse 90 und für die um das Smartphone 40 gezeichnete Fehlerellipse 100. Die gestrichelten Fehlerellipsen sind die Genauigkeiten ohne das Verfahren der Erfindung, also ohne zusätzliche Streckenmessungen und ohne die Netzausgleichung.

Nach Durchführung der Netzausgleichung im Smartphone 10 können sich die Positionen der Smartphones 10 bis 40 verbessert haben. Dieses Ergebnis wird durch die gestrichelte Fehlerellipse 112 um das Smartphone 10, die gestrichelte Fehlerellipse 82 um das Smartphone 20, die gestrichelte Fehlerellipse 92 um das Smartphone 30 und die gestrichelte Fehlerellipse 102 um das Smartphone 40 im Vergleich zu den kleineren durchgezogenen Ellipsen mit gleichem Mittelpunkt verdeutlicht.

Stellt zum Beispiel der Mikroprozessor 18 des Smartphones 10 nach der Durchführung der Netzausgleichung fest, dass die aus der Netzausgleichung bestimmten Positionskoordinaten und deren Genauigkeit hinsichtlich des Smartphones 10 nicht besser als die vom GPS-Empfänger 15 und der Koppelortung gelieferten Daten sind, kann der Mikroprozessor 18 noch einmal das Programm zur Verbesserung der Position des Smartphones 10 starten und hierzu zusätzliche Beobachtungswerte nutzen deren Erhebung und Zusendung es vorab selber anstoßen kann.

Je nach Implementierung und/oder aktuellem Netzzustand kann das Smartphone 10 noch einmal das gleiche, zuvor beschriebene Prozedere durchführen. Das bedeutet, dass
a) die Smartphones 20 bis 40 aufgefordert werden, zu einem neuen Gültigkeitszeitpunkt ihre Positionskoordinaten und deren Genauigkeit zu bestimmen und diese Daten als Positionsinformationen zum Smartphone 10 zu übertragen,
b) das Smartphone 10 die Strecken 50, 70 und 130 selbst misst und das Smartphone 20 auffordert, die Strecke 60 zu messen und den dazugehörenden Beobachtungswert und seine Genauigkeit zum Smartphone 10 zu übertragen, und dass
c) unter Steuerung des Mikroprozessors 18 der auf einer Netzausgleichung basierende Optimierungsalgorithmus zur Bestimmung der Positionskoordinaten, deren Genauigkeit und des Gültigkeitszeitpunkts hinsichtlich des Smartphones 10 und gegebenenfalls hinsichtlich der Smartphones 20 bis 40 ausgeführt wird.

Denkbar ist jedoch auch, dass bei der erneuten Ausführung des auf einer Netzausgleichung basierenden Optimierungsalgorithmus die zuletzt erhaltenen Positionskoordinaten und deren Genauigkeit bezüglich weiterer beweglichen Kommunikationseinrichtungen und gegebenenfalls weitere Beobachtungswerte mit berücksichtigt werden. Denkbar ist auch, dass einige der Smartphones 20 bis 40 und einige der Strecken 50, 60, 70 und 130 nicht mehr berücksichtigt werden. Mit anderen Worten bildet das Smartphone 10 zusammen mit anderen beweglichen Kommunikationseinrichtungen eine neue Gruppe innerhalb des Kommunikationsnetzes 5, die wiederum als temporäres geometrisches Lagenetz mit temporär stabilen Lagepunkten betrachtet werden kann, auf welches eine Netzausgleichung angewendet werden kann. Das Smartphone 10 kann dafür sorgen, dass der Optimierungsalgorithmus so oft wiederholt wird, bis sich die Positionskoordinaten des Smartphones 10 ausreichend verbessert haben.

Obwohl das in Fig. 3 gezeigte drahtlose Kommunikationsnetz 5 auf dem Wi-Fi Direct-Standard beruht und in einem Indoor-Bereich eingesetzt wird, können beliebig andere Kommunikationsnetze, auch Kommunikationsnetze mit indirekten Verbindungen zwischen den mobilen Kommunikationseinrichtungen, d. h. Verbindungen über Basisstationen oder Routern, zum Einsatz kommen. Mit anderen Worten ist die Ausgestaltung des Kommunikationsnetzes und Wahl der verwendeten Kommunikationsprotokolle ohne Bedeutung. Es muss lediglich dafür gesorgt werden, dass Positionsinformationen und Beobachtungswerte zwischen den beweglichen Kommunikationseinrichtungen, das sind gemäß Fig. 3 die Smartphones 10 bis 40, und gegebenenfalls zum Server 120 rechtzeitig ausgetauscht werden können.

Im Folgenden soll die Positionsbestimmung mittels Netzausgleichung, welche im Server 120 ausgeführt wird, erläutert werden.

Gemäß einer Ausführungsvariante sammelt der Server 120 regelmäßig oder zu vorbestimmten Zeitpunkten Positionsinformationen von den beweglichen Kommunikationseinrichtungen 10 bis 40 des Kommunikationsnetzes 5 und bei Bedarf auch deren Möglichkeiten und Bedingungen an Messungen zwischen Kommunikationseinrichtungen teilzunehmen. Damit kennt der Server 120 nicht nur die Position der beweglichen Kommunikationseinrichtungen, sondern auch die Genauigkeit der jeweiligen Position und zum Beispiel auch die Signalstärken beim Senden eines Signals aus dem eine Streckenlänge abgeleitet werden soll. Um das Verfahren zur erstmaligen Bestimmung oder zur Verbesserung der Position des Smartphones 10 anzustoßen, sind verschiedene Szenarien denkbar. Bei einem Szenario fordert das Smartphone 10 den Server 120 direkt auf, seine aktuelle Position zu verbessern, weil die aktuelle Positionsgenauigkeit der Fehlerellipse 110 nicht mehr ausreicht. Denkbar ist auch ein weiteres Szenario, bei dem der Server 120 alle beweglichen Kommunikationseinrichtungen überwacht.

Im vorliegenden Fall sei angenommen, dass das Smartphone 10 dazu ausgebildet ist, den Server 120 aufzufordern, seine aktuellen Positionskoordinaten zu verbessern.

Der Server 120 beginnt nunmehr aus den von den beweglichen Kommunikationseinrichtungen 20 bis 40 gesammelten und im Datenspeicher 123 gespeicherten Positionsinformationen diejenigen beweglichen Kommunikationseinrichtungen zu finden, die ihm helfen können, die Positionskoordinaten des Smartphones 10 zu verbessern. Wiederum sei angenommen, dass die von den Smartphones 20, 30 und 40 empfangenen Positionsinformationen zusammen mit zusätzlich durchzuführenden Beobachtungen zwischen den Kommunikationseinrichtungen geeignet sind, eine verbesserte Position für das Smartphone 10 zu ermitteln.

Ferner sei angenommen, dass die von den Smartphones 10 bis 40 empfangenen Positionsinformationen Angaben enthalten, die dem Server 120 signalisieren, dass das jeweilige Smartphone als bewegliche Kommunikationseinrichtung zu betrachten ist. Unter Ansprechen auf diese Angaben weiß der Mikroprozessor 121, dass er den Optimierungsalgorithmus basierend auf einer Netzausgleichung aus dem Speicher 124 aufrufen und ausführen muss, ohne dass hierbei ein Zwang durch die bereits vorliegenden Positionsbestimmungen der Smartphones 10 bis 40 erfolgt. Alternativ könnte der Server auch einige hohe Koordinatengenauigkeiten aufgrund von Entscheidungskriterien als Koordinatenfestlegung unter Zwang bei der Netzausgleichung behandeln, sofern diese Koordinaten in der Netzausgleichung nicht auch verbessert oder überprüft werden sollen.

Der Mikroprozessor 121 kann dazu ausgebildet sein, einen Gültigkeitszeitpunkt oder ein Gültigkeitsintervall festzulegen, zu dem alle unbekannten Parameter, das sind insbesondere die Positionskoordinaten der Smartphones 10 bis 40 und gegebenenfalls Beobachtungswerte, für die Netzausgleichung zur Verfügung gestellt werden. Dieser Gültigkeitszeitpunkt kann vom Server 120 zu den Smartphones 10 bis 40 übertragen werden. Zudem kann der Mikroprozessor 121 dazu ausgebildet sein, ein Steuersignal zum Smartphone 10 zu übertragen, welches das Smartphone 10 veranlasst, zum Gültigkeitszeitpunkt seine relative Lage zu den Smartphones 20, 30 und 40 zu bestimmen. Weiterhin kann der Mikroprozessor 121 dazu ausgebildet sein, ein Steuersignal zum Smartphone 20 zu übertragen, welches das Smartphone 20 veranlasst, zum Gültigkeitszeitpunkt seine relative Lage zum Smartphone 30 zu ermitteln. Demzufolge führt der Sensor 17 des Smartphones 10 beispielsweise jeweils eine Signalstärke basierte Streckenmessung zu den Smartphones 20, 30 und 40 durch. In der Auswerteeinrichtung 16 werden die gemessenen Signalstärken in entsprechende Streckenlängen umgerechnet. Auf diese Weise wird die Länge der Strecken 50, 130 und 70 bestimmt. Die gemessenen Streckenlängen werden als Beobachtungswerte und gegebenenfalls zusammen mit dem Gültigkeitszeitpunkt und dem systembedingten Messfehler a zum Server 120 übertragen und im Datenspeicher 123 abgelegt. In ähnlicher Weise kann das Smartphone 20 die Strecke 60 messen und den Messwert als Beobachtungswert vorzugsweise zusammen mit dem Gültigkeitspunkt und einem systembedingten Messfehler a zum Server 120 übertragen. Dieser Beobachtungswert wird zusammen mit dem Messfehler a und dem Gültigkeitszeitpunkt ebenfalls im Datenspeicher 123 abgelegt. Ferner fordert der Server 120 die Smartphones 10 bis 40 auf, zum vereinbarten Gültigkeitszeitpunkt ihre Positionskoordinaten und deren Genauigkeit mittels der implementierten GPS-Empfänger und der Koppelortung der Sensoren 9 zu ermitteln. Jedes Smartphone sendet dann eine Positionsinformation, die die Positionskoordinaten, deren Genauigkeit, den Gültigkeitszeitpunkt und eine Identifikation des jeweiligen Smartphones enthält, zum Server 120. Die empfangenen Positionsinformationen werden ebenfalls im Datenspeicher 123 abgelegt.

Um die Position des Smartphones 10 verbessern zu können, ruft der Mikroprozessor 121 nunmehr den auf einer Netzausgleichung basierenden Optimierungsalgorithmus aus dem Programmspeicher 124 auf, liest die Positionsinformationen der Smartphones 10 bis 40 sowie die vier Beobachtungswerte zusammen mit dem Messfehler a aus dem Speicher 11 aus und führt die Netzausgleichung aus. Als Ergebnis der Netzausgleichung werden die unbekannten Parameter, das sind die x-y-Positionskoordinaten des Smartphones 10 und die Genauigkeit dieser Positionskoordinaten und, wenn gewünscht, auch die x-y-Positionskoordinaten der Smartphones 20, 30 und 40 sowie die Genauigkeit der jeweiligen Positionskoordinaten bestimmt. Der Mikroprozessor 121 kann dazu ausgebildet sein, die vom GPS-Empfänger 15 und vom Sensor 9 zum Gültigkeitszeitpunkt ermittelten Positionskoordinaten und deren Genauigkeit mit den vom Optimierungsalgorithmus, d. h. der Netzausgleichung ermittelten Positionskoordinaten des Smartphones 10 und der Genauigkeit dieser Positionskoordinaten zu vergleichen. Sind die mittels der Netzausgleichung ermittelten Positionskoordinaten und deren Genauigkeit besser als die vom GPS-Empfänger 15 und vom Sensor 9 bewirkten Positionsdaten, werden diese Positionskoordinaten und deren Genauigkeit zum Smartphone 10 übertragen und können dort übernommen werden. Unabhängig von der erzielten Genauigkeit kann z.B. bei Bedarfsanmeldung durch das Smartphone 10 oder der anderen beteiligten Smartphones 20 bis 40 oder aufgrund einer Konfigurationsvorgabe im Server 120 das Netzausgleichungsergebnis vom Server 120 an das Smartphone 10 und/oder die Smartphones 20 bis 40 übertragen werden.

Stellt zum Beispiel der Mikroprozessor 121 des Servers 120 nach der Durchführung der Netzausgleichung fest, dass die aus der Netzausgleichung bestimmten Positionskoordinaten und deren Genauigkeit hinsichtlich des Smartphones 10 nicht besser als die vom GPS-Empfänger 15 und Sensor 9 gelieferten Daten sind, kann der Mikroprozessor 121 noch einmal das Programm zur Verbesserung der Position des Smartphones 10 starten.

Je nach Implementierung und/oder aktuellem Netzzustand kann der Server 10 noch einmal das gleiche, zuvor beschriebene Prozedere durchführen. Das bedeutet, dass
a) die Smartphones 10 bis 40 aufgefordert werden, zu einem neuen Gültigkeitszeitpunkt ihre Positionskoordinaten und deren Genauigkeit zu bestimmen und diese Daten als Positionsinformationen zum Server 120 zu übertragen,
b) das Smartphone 10 die Strecken 50, 70 und 130 und das Smartphone 20 die Strecke 60 misst und die dazugehörenden Beobachtungswert zum Server 120 übertragen werden, und dass
c) unter Steuerung des Mikroprozessors 121 der auf einer Netzausgleichung basierende Optimierungsalgorithmus zur Bestimmung der Positionskoordinaten, deren Genauigkeit und des Gültigkeitszeitpunkts hinsichtlich des Smartphones 10 und gegebenenfalls hinsichtlich der Smartphones 20 bis 40 ausgeführt wird.

Denkbar ist jedoch auch, dass bei der erneuten Ausführung des auf einer Netzausgleichung basierenden Optimierungsalgorithmus die Positionskoordinaten und deren Genauigkeit bezüglich weiterer beweglichen Kommunikationseinrichtungen und gegebenenfalls weitere Beobachtungswerte mit berücksichtigt werden. Denkbar ist auch, dass einige der Smartphones 20 bis 40 und einige der Strecken 50, 60, 70 und 130 nicht mehr berücksichtigt werden. Der Server 120 kann dafür sorgen, dass der Optimierungsalgorithmus so oft wiederholt wird, bis sich die Positionskoordinaten des Smartphones 10 geeignet verbessert haben.

Da der Optimierungsalgorithmus basierend auf einer Netzausgleichung im Wesentlichen vollständig im Server 120 durchgeführt wird, werden die Akkumulatoren der Smartphones 10 bis 40 weniger belastet.

Ein alternatives Ausführungsbeispiel sieht vor, dass der Server 120 zwar die Positionsinformationen der Smartphones 10 bis 40 empfängt und überwacht, aber das Smartphone 10 lediglich anstößt, die Netzausgleichung dann selbst durchzuführen. In diesem Fall informiert der Server 120 das Smartphone 10 lediglich darüber, dass die Smartphones 20, 30 und 40 über Positionsinformationen verfügen, die seine Positionskoordinaten und deren Genauigkeit verbessern könnten, oder er informiert nur darüber, dass in der näheren Umgebung von Smartphone 10 sich weitere Smartphones befinden und sendet gleichzeitig deren Koordinaten und Genauigkeiten der Koordinaten.

Gemäß einem weiteren Ausführungsbeispiel sei angenommen, dass die Smartphones 30 und 40 nicht nur Mitglieder der Gruppe aus den Smartphones 10 bis 40, sondern auch Mitglieder einer anderen Gruppe, d. h. eines anderen temporären geometrischen stabilen Lagenetzes sind, dem beispielsweise drei weitere, nicht dargestellte bewegliche Kommunikationseinrichtungen angehören. Weiterhin sei angenommen, dass die Positionskoordinaten der Smartphones 30 und 40 und die Genauigkeit dieser Positionskoordinaten auch im Wesentlichen für den gleichen Zeitpunkt mittels einer Netzausgleichung bezüglich der anderen Gruppe bestimmt worden sind, die ebenfalls vom Server 120 durchgeführt worden ist. Der Server 120 kann dazu ausgebildet sein, basierend auf den beiden Netzausgleichungen eine an sich bekannte Blockausgleichung durchzuführen, um die Positionen aller beteiligten beweglichen Kommunikationseinrichtungen zu verbessern.

Fig. 4 zeigt ein zweites Szenario. Ausschnittsweise ist ein beispielhaftes, drahtloses Kommunikationsnetz 5' gezeigt, innerhalb dessen sich eine bewegliche Kommunikationseinrichtung 10 und drei bewegliche Kommunikationseinrichtungen, 20, 30 und 40, befinden und temporär eine Gruppe bilden. Diese temporäre Gruppe kann als ein temporär stabiles geometrisches Lagenetz mit vier Punkten betrachtet werden, welche durch die vier Smartphones 10 bis 40 dargestellt werden. Alle vier beweglichen Kommunikationseinrichtungen 10 bis 40 sind Smartphones, die im Aufbau und in der Funktionsweise dem in Fig. 1 gezeigten Smartphone 10 ähneln. Die Smartphones 10, bis 30 befinden sich in einer Halle 1', während sich Smartphone 40 in einem Eingangsbereich vor der Halle 1' befindet. Es wird angenommen, dass das Smartphone 10 seine Positionsgenauigkeit verbessern will und hierzu alle in der Reichweite des Sensors 17 erreichbare Kommunikationseinrichtungen mittels Streckenmessung nutzen will, und zwar unter Berücksichtigung der Streckenmessungen zu den Smartphones, der übermittelten Positionsinformation der an den Streckenmessungen beteiligten Smartphones, die aber nun bewusst genähert als unter Zwang genutzt werden, und einer Netzausgleichung. Die Netzausgleichung entartet in diesem Fall in einer Ausgleichung eines mehrfachen Vorwärtseinschnittes.

Die Funktionsweise der in Fig. 4 gezeigten Kommunikationseinrichtungen entspricht der in Fig. 3 gezeigten Anordnung, außer dass die Strecke zwischen Smartphone 20 und 30 nicht bestimmt wird und das Smartphone 10 entscheidet, dass die ungenauen Positionen der Smartpones 20 bis 40 in der Netzausgleichung als fehlerfreie Positionen unter Zwang festgelegt werden und somit die Netzausgleichung keine Verbesserungen für diese Smarthones liefern kann und somit die Ergebnisse der Netzausgleichung nicht an die Smartphones 20 bis 40 übertragen werden müssen. Da die Smartphones 20 und 30 als fehlerfrei unter Zwang in der Netzausgleichung verwendet werden und hierzu die Koppelortungsinformationen der Mittelpunkte der Fehlerellipse 80 und 90 verwendet werden, muss die Strecke zwischen 20 und 30 nicht gemessen werden, da sie in der Netzausgleichung keinen Beitrag liefern würde.

Auch der Server 120 kann in Fig. 4 entsprechend wie in Fig. 3 genutzt werden, außer dass die Netzausgleichung nun unter Zwang durchgeführt wird und sich dadurch die Kommunikation und Kommunikationsinhalte entsprechend ändern kann. Der Server 120 kann hier auch zusätzlich das Smartphone 10 bei der Suche der mit Streckenmessungen erreichbaren Smartphones der Umgebung unterstützen, indem der Server 120 die jeweilige Reichweite vom Smartphone 10 zu den übrigen Smartphones aus den ihm bekannten Eigenschaften und Betriebszuständen der jeweiligen Sensoren 17 bestimmen kann, die dem Server 120 von den Smartphones zugesendet wurden.

Die gestrichelten Ellipsen in Fig. 4 sind die Fehlerellipsen, die aus den Ergebnissen aufgrund der Koppelortung der jeweiligen GPS-Empfänger 15 und Sensor 9 folgen. Die Streckenmessungen 50, 70 und 130 seien alle mit der Genauigkeit a im Wesentlichen zeitgleich zu den Ortungen aus der Koppelortung durchgeführt worden. Dann folgt durch die Netzausgleichung unter Zwang für das Smartphone 10 eine Verbesserung der Fehlerellipse von 110 zu 112, wobei 112 in Fig. 4 wesentlich größer als die Fehlerellipse 112 aus Fig. 3 ist. Entsprechend dem zu Fig. 3 Gesagten wird sich i. d. R. beim Vorliegen von realen Daten und deren Einzelfehlern und deren Ausgleichung die absolute Position von Smartphone 10 durch die zusätzlichen Streckenmessungen verändern. Zum besseren Vergleich der Fehlerellipsen wurden die Positionen aber identisch gewählt.

Der Mikroprozessor 18 kann dazu ausgebildet sein, einen Gültigkeitszeitpunkt oder ein Gültigkeitsintervall festzulegen, zu dem die Positionskoordinaten und Beobachtungswerte für die Netzausgleichung zur Verfügung gestellt werden. Dieser Gültigkeitszeitpunkt kann vom Smartphone 10 den Smartphones 20 bis 40 zugesandt werden.

Zudem kann der Mikroprozessor 18 dazu ausgebildet sein, zu veranlassen, dass das Smartphone 10 zum Gültigkeitszeitpunkt seine relative Lage zu den Smartphones 20, 30 und 40 selbst bestimmt. Im Unterschied zu dem in Fig. 3 gezeigten Kommunikationsnetz 5 braucht die Strecke 60, welche die Smartphones 20 und 30 verbindet, nicht gemessen werden, da deren Endpunkte als statische Punkte unter Zwang in der Netzausgleichung definiert worden sind. Demzufolge misst lediglich der Sensor 17 des Smartphones 10 beispielsweise in der zuvor beschriebenen Art und Weise die Strecken 50, 70 und 130. In der Auswerteeinrichtung 16 werden die gemessenen Signalstärken in entsprechende Streckenlängen umgerechnet. Auf diese Weise werden die Strecken 50, 130 und 70 und somit die relative Lage des Smartphones 10 zum Smartphone 20, zum Smartphone 30 bzw. zum Smartphone 40 bestimmt. Die gemessenen Streckenlängen werden als Beobachtungswerte und gegebenenfalls zusammen mit dem Gültigkeitszeitpunkt und einem systembedingten Messfehler a im Datenspeicher 11 abgelegt.

Um die Position des Smartphones 10 zu bestimmen, ruft der Mikroprozessor 18 nunmehr den Optimierungsalgorithmus aus dem Programmspeicher 12 auf, der auf einer Netzausgleichung unter Verwendung eines vorbestimmten Koordinatensystems basiert. Zudem liest er die Positionsinformationen der Smartphones 20 bis 40 sowie die drei Beobachtungswerte zusammen mit dem Messfehler a aus dem Speicher 11 aus und führt eine Netzausgleichung unter Verwendung des vorbestimmten Koordinatensystems aus. Als Ergebnis der Netzausgleich werden nur die x-y-Positionskoordinaten des Smartphones 10 als unbekannte Parameter der Netzausgleichung und die Genauigkeit dieser Positionskoordinaten bestimmt.

Angemerkt sei an dieser Stelle, dass beispielsweise zu einem späteren Zeitpunkt das Smartphone 10 zur Verbesserung seiner Position die hinsichtlich der Fig. 3 erläuterte Netzausgleichung mit stochastischer Definition des Koordinatensystems durchführen kann. Ferner sei angemerkt, dass anstelle der als statische Kommunikationseinrichtungen behandelten Smartphones 20 bis 40 ortsfeste Kommunikationseinrichtungen mit fest zugeordneten Positionskoordinaten, wie zum Beispiel drahtlose Zugangspunkte, verwendet werden können.

Nach Durchführung der Netzausgleichung unter Verwendung des vorbestimmten Koordinatensystems kann sich lediglich die Position des Smartphone 10 verbessern, da die Smartphones 20 bis 40 als statische Kommunikationseinrichtungen unter Zwang behandelt werden. Dieses Ergebnis wird durch die durchgezogene Linie der Fehlerellipse 112 um das Smartphone 10 verdeutlicht.

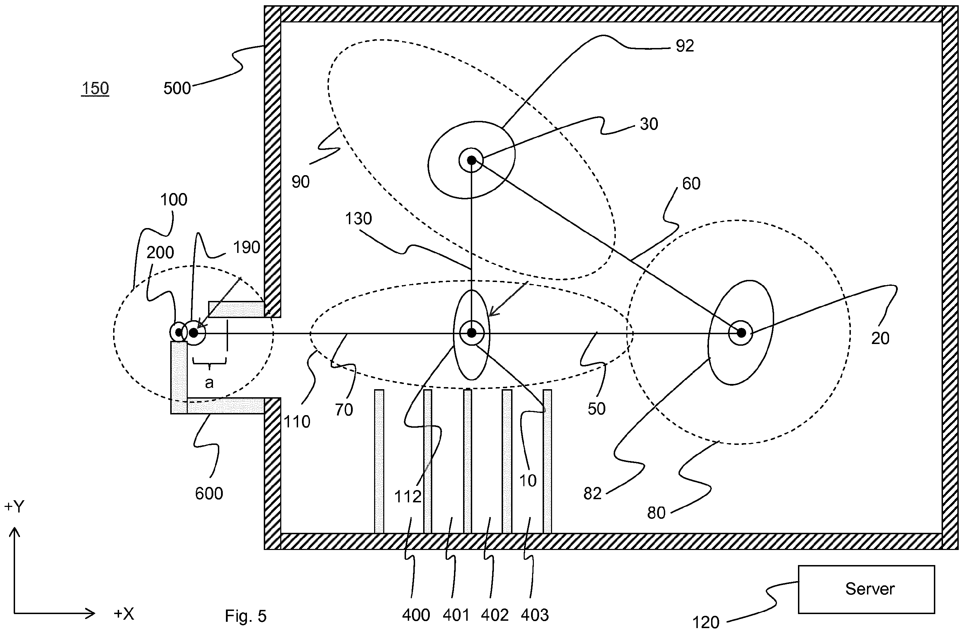

Fig. 5 zeigt ein drittes Szenario. Ausschnittsweise ist ein beispielhaftes, drahtloses Kommunikationsnetz 150 gezeigt, innerhalb dessen ähnlich wie in Fig. 3 drei bewegliche Kommunikationseinrichtungen 10, 20 und 30 und eine bewegliche Kommunikationseinrichtung 190, die in der Netzausgleichung als statische Kommunikationseinrichtung unter Zwang behandelt wird, temporär eine Gruppe bilden. Diese temporäre Gruppe kann als ein temporär stabiles geometrisches Lagenetz mit vier Punkten betrachtet werden, welche durch die vier Smartphones 10, 20, 30 und 190 dargestellt werden.

Die Funktionsweise des in Fig. 5 dargestellten drahtlosen Kommunikationsnetzes 150 ist im Wesentlichen identisch der Funktionsweise des Kommunikationsnetzes 5 in Fig. 3, bis auf die Unterschiede, die durch die sehr hohe Positionsgenauigkeit des Smartphones 190 verursacht werden.

Folgende beispielhafte Annahmen werden getroffen:
1. Die Smartphones 10 bis 30 entsprechen den in Fig. 3 gezeigten Smartphones 10 bis 30 und befinden sich auf einem Messegelände mit mehreren Hallen, wobei sich die Smartphones 10 bis 30 in einer Halle 500 befinden und nur Smartphone 190 außerhalb der Halle 500 ist.
2. Smartphone 190 kann im Aufbau und der Funktionsweise dem in Fig. 1 gezeigten Smartphone 10 entsprechen und besitzt eine wesentlich höhere aktuelle Genauigkeit als das in Fig.3 oder Fig. 4 gezeigte Smartphone 40, da es durch Kontakt mit einem NFC-RFID 200 die hochgenaue Positionsinformation des NFC-RFIDs für sich übernommen hat.
3. Die Smartphones 10 bis 30 benötigen zu Navigationszwecken eine wesentlich bessere Genauigkeit für ihre Positionskoordinaten.
4. Die aktuellen Positionen und deren Genauigkeiten der Smartphones 10 bis 30 und 190, dargestellt durch die gestrichelten Fehlerellipsen 80, 90 und 110, wurden ohne Anwendung des Verfahrens der Erfindung nur durch den jeweiligen GPS-Empfänger und Sensor 9 oder durch Kontakt mit einem NFC-RFID bestimmt.
5. Die Smartphones 10 bis 30 und 190 sind so ausgelegt, dass sie zum Beispiel einen großen Genauigkeitssprung in der Verbesserung ihrer Positionierung und/oder die Erreichung einer hohen absoluten Genauigkeit unverzüglich an einen Server 120 und/oder direkt an die umgebenden Smartphones senden, wobei die Kommunikation über die jeweilige Schnittstelle 14 erfolgt.
6. Es sei angenommen, dass der Benutzer des Smartphones 190 vor einem Check-in Punkt 600 am Eingang der Halle 500 die Positionsgenauigkeit der Fehlerellipse 100 hatte und nach Berührung des NFC-RFID 200 bei der Eingangskontrolle eine so hohe Positionsgenauigkeit des RFID 200 übertragen bekommt, dass das Smartphone 190 die Position als ausreichend genau fehlerfrei bewertet und für sich als fehlerfrei übernimmt.
7. Das Smartphone 190 wird als bewegliche Kommunikationseinrichtungen behandelt, deren Position aber ausreichend realistisch im Vergleich zu den anderen Smartphones als fehlerfrei angenommen wird.

Weiterhin sei angenommen, dass der Benutzer des Smartphones 10 am Ende eines Korridors 402 ein Zwischenziel erreichen möchte. In Fig. 5 sind neben dem Korridor 402 weitere Korridore 400, 401 und 403 sowie die Trennwände der Korridore eingezeichnet.

Der Benutzer des Smartphones 10 gibt nunmehr in seinem Smartphone 10 eine Zielposition am Ende des Korridors 402 ein.

Beispielsweise unter Ansprechen auf die eingegebene Zielposition wird nunmehr im Smartphone 10 ein Programm gestartet, mit dessen Hilfe versucht wird, die aktuelle Position des Smartphones 10 zu verbessern. Der Mikroprozessor 18 kann dazu ausgebildet sein, unter Ansprechen auf die im Speicher 13 hinterlegte Karte und auf die vom Benutzer eingegebene Zielposition zu erkennen, ob die aktuelle Messgenauigkeit des GPS-Empfängers 15 zusammen mit Sensor 9 genügt. Wenn nicht, startet der Mikroprozessor 18 das Programm. Der Mikroprozessor 15 kann ferner dazu ausgebildet sein, unter Ansprechen auf die im Speicher 13 hinterlegte Karte und die vom Benutzer eingegebene Zielposition zu erkennen, welche Positionskoordinaten oder welche Richtung der Fehlerellipse insbesondere verbessert werden sollte. Im vorliegenden Fall erkennt der Mikroprozessor, dass eine Verbesserung vornehmlich in x-Richtung notwendig ist, da sich das Smartphone 10 in Richtung des Korridors 402 bereits eine akzeptable Genauigkeit mit Fehlerellipse 110 aufweist und zur Erkennung des Eingangs des Korridors 402 die x-Richtung entscheidend ist und somit die Positioniergenauigkeit des Smartphones 10 in x-Richtung verbessert werden muss.

Das Smartphone 10 beginnt nunmehr seine Umgebung auf bewegliche und/oder statische Kommunikationseinrichtungen abzusuchen, die ihm vielleicht helfen können, seine Positionskoordinaten zu verbessern. Da das Smartphone 190 kurz vorher seinen Genauigkeitssprung, den es nach dem Kontakt mit NFC RFID 200 erfährt, zusammen mit seiner Positionsinformation an alle Smartphones der Umgebung und/oder den Server 120 gesendet hat, erkennt das Smartphone 10, dass es insbesondere Smartphone 190 mit in eine Netzausgleichung mit zusätzlichen Beobachtungen einbeziehen sollte, da die Richtung von Smartphone 10 zu Smartphone 190 genau in der x-Richtung liegt. Im vorliegenden Beispiel sei angenommen, dass das Smartphone 190 auch zum Zeitpunkt der von Smartphone 10 initiierten zusätzlichen Beobachtungen, das sind die Streckenmessungen 70, 50, 60 und 130 mit einer jeweiligen Standardabweichung a, weiterhin die gleiche Position und Genauigkeit des NFC-RFID 200 aufweist. Der Mikroprozessor 18 des Smartphones 10 kann dazu ausgebildet sein, anhand der in den empfangenen Positionsinformationen enthaltenen Genauigkeit abzuschätzen, ob die aktuelle Position des Smartphones 10 verbessert werden kann. Beim vorliegenden Ausführungsbeispiel sei angenommen, dass der Mikroprozessor 18 berechnet hat, dass die von den Smartphones 20, 30 und 190 empfangenen Positionsinformationen geeignet sind, eine verbesserte Position insbesondere ausreichend genau in x-Richtung zu ermitteln. Ferner sei angenommen, dass die von den Smartphones 20, 30 und 190 kommenden Positionsinformationen Angaben enthalten, die signalisieren, dass das jeweilige Smartphone als bewegliche Kommunikationseinrichtung zu betrachten ist und somit der Zeitpunkt der Messungen und Positionsbestimmungen zu berücksichtigen ist, falls er nicht identisch ist. Die vom Smartphone 190 kommende Positionsinformation bewertet das Smartphone 10 im Abgleich mit den anderen Genauigkeiten so, dass es die Position des Smartphones 190 als mit Standardabweichung Null in die Netzausgleichung einführt. Die anderen Positionen werden zur stochastischen Definition des Koordinatensystems in der Netzausgleichung als zusätzliche Beobachtungen genutzt.

Der Mikroprozessor 18 kann dazu ausgebildet sein, einen Gültigkeitszeitpunkt oder ein Gültigkeitsintervall festzulegen, zu dem alle unbekannten Parameter, das sind die Positionskoordinaten der Smartphones 10 bis 30 und 190 und gegebenenfalls Beobachtungswerte, für die Netzausgleichung zur Verfügung gestellt werden. Dieser Gültigkeitszeitpunkt kann vom Smartphone 10 den Smartphones 20 bis 30 und 190 zugesandt werden. Zudem kann der Mikroprozessor 18 oder der Server 120 dazu ausgebildet sein, zu veranlassen, dass das Smartphone 10 zum Gültigkeitszeitpunkt seine relative Lage zu den Smartphones 20, 30, und 190 selbst bestimmt. Der Mikroprozessor 18 veranlasst im vorliegenden Beispiel zudem das Smartphone 20, seine relative Lage zum Smartphone 30 zu bestimmen. Demzufolge misst der Sensor 17 des Smartphones 10 beispielsweise jeweils die empfangene Signalstärke der Smartphones 20, 30, und 190. In der Auswerteeinrichtung 16 werden die gemessenen Signalstärken in entsprechende Streckenlängen umgerechnet. Auf diese Weise werden die Strecken 50, 70 und 130 und somit die relative Lage des Smartphones 10 zum Smartphone 20, zum Smartphone 30, zum Smartphone 40 bzw. zum Smartphone 190 bestimmt. Die gemessenen Streckenlängen werden als Beobachtungswerte und gegebenenfalls zusammen mit dem Gültigkeitszeitpunkt und einem systembedingten Messfehler a, der in Fig. 5 beispielhaft bezüglich des Smartphones 190 eingezeichnet ist, im Datenspeicher 11 abgelegt. In ähnlicher Weise kann das Smartphone 20 die Strecke 60 messen und den Messwert als Beobachtungswert vorzugsweise zusammen mit dem Gültigkeitspunkt und einem systembedingten Messfehler a zum Smartphone 10 übertragen. Diese Beobachtungswerte werden zusammen mit dem Messfehler a und dem Gültigkeitszeitpunkt ebenfalls im Datenspeicher 11 abgelegt.

Angemerkt sei an dieser Stelle, dass die Smartphones 10 bis 30 und 190 dazu ausgebildet sein können, Informationen auszutauschen, die den Smartphones mitteilen, ob eine relative Lage zwischen zwei Smartphones gemessen werden kann oder nicht. Im vorliegenden Fall sei angenommen, das das Smartphone 30 erkennt, dass zum Beispiel infolge einer Mauerabschattung seine relative Lage zum Smartphone 190 nicht durch eine Signalstärke basierte Streckenmessung gemessen werden kann. Diesen Zustand teilt sie dann den anderen Smartphones mit.

Um die Position des Smartphones 10 verbessern zu können, ruft der Mikroprozessor 18 nunmehr den auf einer Netzausgleichung basierenden Optimierungsalgorithmus aus dem Programmspeicher 12 auf, liest die Positionsinformationen der Smartphones 10 bis 30 als beobachtete unbekannte Parameter, die vier Beobachtungswerte und die fehlerfreien Positionskoordinaten des Smartphones 190 zusammen mit dem Messfehler a aus dem Speicher 11 aus und führt die Netzausgleichung aus. Im vorliegenden Beispiel würde es sogar ausreichen, die Netzausgleichung nur mit den Smartphones 10, 20 und 190 durchzuführen, sofern nicht unabhängig vom und zeitgleich zum Smartphone 10 auch das Smartphone 30 einen Bedarf an Genauigkeitsverbesserung seiner Position hätte. Als Ergebnis der Netzausgleichung werden die unbekannten Parameter, das sind die x-y-Positionskoordinaten des Smartphones 10 und die Genauigkeit dieser Positionskoordinaten und, wenn gewünscht, auch die x-y-Positionskoordinaten der Smartphones 20 und 30 sowie die Genauigkeit der jeweiligen Positionskoordinaten bestimmt. Der Mikroprozessor 18 kann dazu ausgebildet sein, die vom GPS-Empfänger 15 zusammen mit dem Sensor 9 zum Gültigkeitszeitpunkt ermittelten Positionskoordinaten und deren Genauigkeit mit den vom Optimierungsalgorithmus, d. h. der Netzausgleichung ermittelten Positionskoordinaten des Smartphones 10 und der Genauigkeit dieser Positionskoordinaten zu vergleichen. Sind die mittels der freien Netzausgleichung ermittelten Positionskoordinaten und deren Genauigkeit besser als die vorherigen Positionsdaten, werden die vorherigen Positionsdaten ersetzt.

Die Smartphones 20 und 30 und/oder der Server 120 können dazu ausgebildet sein, Anforderungsbefehle zum Smartphone 10 zu übertragen, die den Mikroprozessor 18 veranlassen, bei der Verarbeitung des Optimierungsalgorithmus nicht nur die Positionskoordinaten und deren Genauigkeit des Smartphones 10, sondern auch die Positionskoordinaten und deren Genauigkeit der Smartphones 20 und 30 zu bestimmen. Je nach Implementierung werden diese Positionskoordinaten und deren Genauigkeit vom Smartphone 10 zu den jeweiligen Smartphone 20 und 30 übertragen. Mit anderen Worten profitieren die Smartphones 20 und 30 von der im Smartphone 10 durchgeführten Netzausgleichung, da ihre Position gleich mit verbessert werden kann.

Angemerkt sei an dieser Stelle, dass anstelle des als statische Kommunikationseinrichtung behandelten Smartphones 190 oder zusätzlich dazu eine oder mehrere ortsfeste Kommunikationseinrichtungen mit fest zugeordneten Positionskoordinaten installiert sein können, deren statische Positionskoordinaten im Bedarfsfall vom Smartphone 10 bei der Durchführung der Netzausgleichung als stochastisch definierte oder unter Zwang mit Standardabweichung Null definierte Koordinaten zur Definition des Koordinatensystems und als beobachtete Unbekannte mit verwendet werden können.

Eine positive Auswirkung der Durchführung einer Netzausgleichung im Smartphone 10 kann grafisch anhand der Fig. 5 erläutert werden. Um die Smartphone 10 bis 30 ist jeweils eine gestrichelte Fehlerellipse gezeichnet, die den aktuellen Ungenauigkeitsbereich anzeigt, innerhalb dessen die Position des jeweiligen Smartphones liegen kann. Zur gleichen Zeit habe das Smartphone 190 bereits seine fehlerfreie Position bestimmt. Die Fehlerellipsen können in an sich bekannter Weise berechnet werden. Beispielsweise spiegelt die Fehlerellipse 110 um das Smartphone 10 die aktuelle Genauigkeit des GPS-Empfängers 15 zusammen mit Sensor 9 wieder. Das Gleiche gilt für die um das Smartphone 20 gezeichnete Fehlerellipse 80, für die um das Smartphone 30 gezeichnete Fehlerellipse 92.

Nach Durchführung der Netzausgleichung nur unter Zwang in den Koordinaten des Smartphones 190 im Smartphone 10 können sich die Positionen der Smartphones 10 bis 30 verbessert haben. Dieses Ergebnis wird durch die durchgezogene Linie der Fehlerellipse 112 um das Smartphone 10, die Fehlerellipse 82 um das Smartphone 20, die Fehlerellipse 92 um das Smartphone 30 verdeutlicht. Die Fehlerellipse 112 um das Smartphone 10 zeigt, dass nach Durchführung der Netzausgleichung insbesondere die Genauigkeit der x-Koordinate verbessert worden ist.

Stellt zum Beispiel der Mikroprozessor 18 des Smartphones 10 nach der Durchführung der Netzausgleichung fest, dass die aus der Netzausgleichung bestimmten Positionskoordinaten und deren Genauigkeit hinsichtlich des Smartphones 10 nicht besser als die vom GPS-Empfänger 15 und Sensor 9 gelieferten Daten sind, kann der Mikroprozessor 18 noch einmal das Programm zur Verbesserung der Position des Smartphones 10 starten.

Je nach Implementierung und/oder aktuellem Netzzustand kann das Smartphone 10 noch einmal das Gleiche, zuvor beschriebene Prozedere durchführen. Das bedeutet, dass
a) die Smartphones 20 bis 30 aufgefordert werden, zu einem neuen Gültigkeitszeitpunkt ihre Positionskoordinaten und deren Genauigkeit zu bestimmen und diese Daten als Positionsinformationen zum Smartphone 10 zu übertragen,
b) das Smartphone 10 die Strecken 50, 70 und 130 selbst misst und das Smartphone 20 auffordert, die Strecke 60 zu messen und die dazugehörenden Beobachtungswerte zum Smartphone 10 zu übertragen, und dass
c) unter Steuerung des Mikroprozessors 18 der auf einer Netzausgleichung basierende Optimierungsalgorithmus zur Bestimmung der Positionskoordinaten, deren Genauigkeit und des Gültigkeitszeitpunkts hinsichtlich des Smartphones 10 und gegebenenfalls hinsichtlich der Smartphones 20 bis 30 ausgeführt wird, wobei die Positionskoordinaten des Smartphones 190 unter Zwang mit verwendet werden, sofern sie noch die gleiche übergeordnete Genauigkeit wie bei der vorherigen Netzausgleichung haben.

Denkbar ist jedoch auch, dass bei erneuter Ausführung des auf einer Netzausgleichung basierenden Optimierungsalgorithmus die Positionskoordinaten und deren Genauigkeit bezüglich weiterer beweglichen Kommunikationseinrichtungen und gegebenenfalls weitere Beobachtungswerte mit berücksichtigt werden. Denkbar ist auch, dass einige der Smartphones 20, 30 und 190 sowie einige der Strecken 50, 60, 70 und 130 nicht mehr berücksichtigt werden. Mit anderen Worten bildet das Smartphone 10 zusammen mit anderen beweglichen Kommunikationseinrichtungen eine neue Gruppe innerhalb des Kommunikationsnetzes 150, die wiederum als temporäres stabiles geometrisches Lagenetz betrachtet werden kann, auf welches eine Netzausgleichung angewendet werden kann. Das Smartphone 10 kann dafür sorgen, dass der Optimierungsalgorithmus so oft wiederholt wird, bis sich die Positionskoordinaten des Smartphones 10 verbessert haben. Denkbar ist jedoch auch, dass zum Beispiel die Streckenmessungen zeitgleich von beiden Gegenstationen durchgeführt werden, oder dass auch andere Beobachtungstypen zwischen Smartphones genutzt werden, wie zum Beispiel Richtungen oder Winkel.

Das in Fig. 5 gezeigte Smartphone 190 kann in Aufbau und Funktionsweise dem in Fig. 1 dargestellten Smartphone 10 ähneln.

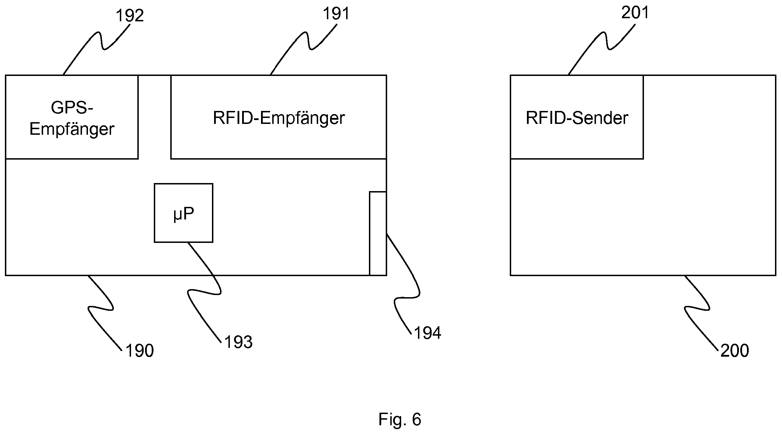

In Fig. 6 ist das Smartphone 190 lediglich schematisch mit einem GPS-Empfänger 192 und einem Mikroprozessor 193 dargestellt, obwohl es in Aufbau und Funktion dem in Fig. 1 dargestellten Smartphone 10 entsprechen kann. Zusätzlich weist das Smartphone 190 einen Nahfeld-Kommunikationsbaustein 191 auf, der beispielsweise einen NFC-RFID (Near Field Communication - Radio Frequency Identification)-Empfänger enthält. Einen solchen NFC-Kommunikationsbaustein können auch die in den Fig. 3 bis 5 gezeigten Smartphones 10 bis 40 enthalten. In Fig. 6 ist ferner eine drahtlose Kommunikationseinrichtung 200 mit einem NFC-RFID-Sender 201 gezeigt, die zum Beispiel Ortsfest auf einem Sockel montiert sein kann. Nachfolgend wird beispielhaft erläutert, wie das Smartphone 190 zu seinen präzisen Positionskoordinaten gelangt ist, die sie im Kommunikationsnetz 150 zur Verwendung angeboten hat.

Angenommen sei, dass im Smartphone 190 das standardisierte NFC-Kommunikationsprotokoll aktiviert wurde. Gelangt das Smartphone 190 nunmehr in den Empfangsbereich der Einrichtung 200, empfängt es das vom NFC-RFID-Sender 201 ausgesendete Signal. Da bei Verwendung des Nahfeldkommunikationsprotokolls angenommen wird, dass die Reichweite des Senders 201 z. B. 0,04 m beträgt, kann der Mikroprozessor 193 des Smartphones 190 diese Reichweite als Beobachtungswert, der die Distanz zwischen dem Smartphone 190 und der Einrichtung 200 definiert, annehmen und die Genauigkeit der Länge der Reichweite zum Beispiel mit 0,03 m bewerten. Zusätzlich überträgt die Kommunikationseinrichtung 200 auch ihre fehlerfreien Positionskoordinaten zum Smartphone 190. Im Smartphone 190 werden diese Positionskoordinaten der Kommunikationseinrichtung 200 mit einer Positionsgenauigkeit von 0,05 m (= Wurzel aus (0,04*0,04+0,03*0,03)) hinterlegt. Diese Positionsinformation stellt das Smartphone 190 in Fig. 5 dem Smartphone 10 als bewusst fehlerfrei angenommene Koordinaten bei der Netzausgleichung zur Verfügung, da sie übergeordnet genau im Vergleich zu allen anderen Werten sind.

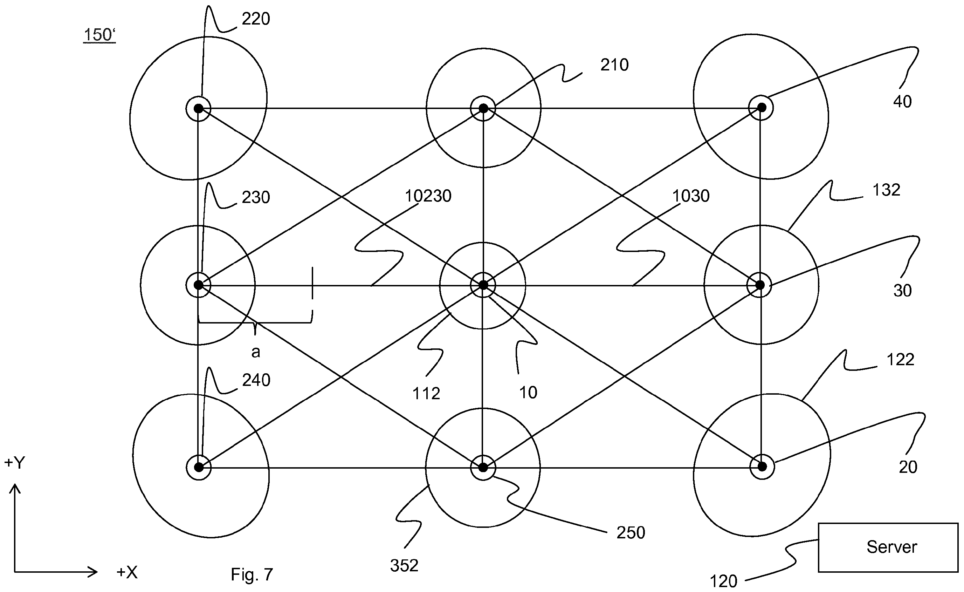

Ein weiteres Beispiel ist in Fig. 7 enthalten, dass die Netzausgleichung in einem freien Netz behandelt, das hier zum Beispiel durch das Gauß-Markov-Modell mit speziellen Restriktionen definiert ist, wodurch die Spur der Varianz-Kovarianz-Matrix der unbekannten Koordinaten, also die Summe der Varianzen aller Koordinaten, minimal wird.

In Fig. 7 ist ein drahtloses Kommunikationsnetz 150' mit Smartphones 10 bis 40 und 210 bis 250 dargestellt. Alle Smartphones seien vom Typ Mobilfunktelefon 10 gemäß Fig. 1. Die Smartphones sind initial entweder alle ohne bekannte Positionsbestimmung oder die Positionsbestimmungen seien derart ungenau, dass sie im Vergleich zur dargestellten Streckenmessgenauigkeit a als derart schlecht bewertet werden, dass die Positionsbestimmungen durch die jeweiligen GPS-Empfänger 15 und Sensoren 9 nicht zur stochastischen Definition des Koordinatensystems genutzt werden sollen.

Die Koordinaten aller Smartphones werden nur basierend auf gleichgenauen Streckenmessungen zwischen den Smartphones und der freien Netzausgleichung bestimmt, wobei das Berechnungskoordinatensystem durch die Auffelderung der unbekannten Koordinaten auf ihre Näherungswerte festgelegt wird und sich im Iterationsprozess der Parameterschätzung jeweils ändert, da sich die Näherungswerte ändern. Denn in einer Folgeiteration werden immer die zuletzt geschätzten Koordinatenunbekannten als neue Näherungswerte genutzt. Diese Auffelderungstechnik im freien Netz ist dem geodätischen Fachmann bekannt. Durch die freie Netzausgleichung werden die strengen statistischen Ausreißertests auf grob falsche Beobachtungen nicht beeinflusst.

Das Koordinatensystem, in dem die Koordinaten und deren Genauigkeiten im Konvergenzpunkt der Schätzung dieser freien Netzausgleichung vorliegen, wird somit durch die initialen Näherungswerte der Koordinatenunbekannten der Positionen aller beteiligten Smartphones bestimmt. Die durch diese Netzausgleichung bestimmten Koordinaten und deren Genauigkeiten können durch Ähnlichkeitstransformationen in einem Nachverarbeitungsschritt in ein anderes Zielkoordinatensystem streng transformiert werden.

Im vorliegenden Fall seien nur die jeweils kurzen Strecken zwischen unmittelbar benachbarten Smartphones mittels Signalstärken basierter Entfernungsmessung durch den Sensor 17 bestimmt worden. Das heißt, dass auf langen Verbindungslinien wie von Smartphone 230 zu Smartphone 30 nur die Strecke 10230 zwischen den Smartphones 230 und 10 sowie die Strecke 1030 zwischen den Smartphones 10 und 30 gemessen wurden, aber nicht zusätzlich noch die Strecke zwischen den Smartphones 230 und 30 gesondert gemessen wurde. Somit liegen insgesamt 20 unabhängige Streckenmessungen vor, die alle die gleiche Genauigkeit a haben. Auf der Strecke zwischen den Smartphones 10 nach 230 wurde das Maß a beispielhaft eingetragen. Die Fehlerellipsen der Positionen der Smartphones folgen nach dieser freien Netzausgleichung durch die durchgezogenen Linien der Ellipsen in Fig. 7, z. B. der Fehlerellipse 112 zu Smartphone 10 und der Fehlerellipse 122 zu Smartphone 20.

Das in Fig. 7 gezeigte Szenario kann zum Beispiel dann vorliegen, wenn das Smartphone 10 oder mehrere Smartphones zugleich, z. B. Smartphones 10, 30, 210 und 230, ihre relative Position zu anderen der beteiligten Smartphones bestimmen wollen, eine GPS-basierte Bestimmung aber nicht möglich ist und die Information aus dem jeweiligen Bewegungssensor 9 extrem ungenau ist. Für die relative Lage zu einem anderen an der freien Netzausgleichung beteiligten Smartphones ist die Definition des gemeinsamen Koordinatensystems als ein absolut im Raum definiertes Koordinatensystem nicht von Bedeutung. Wichtig ist hier, dass die Lagerung des Koordinatensystems so erfolgt, dass es stabil gelagert ist und für die besonderen Smartphones, hier 10, 30, 210 und 230 möglichst geringe Fehlerellipsen nach der Netzausgleichung liefert, damit eines dieser speziellen beteiligten Smartphones ein anderes dieser speziellen Smartphones durch relative Navigationsvorgaben bezüglich dieses Koordinatensystems gut erreichen kann. Die Auffelderung kann hierauf eingehen und dementsprechend nur bestimmte Koordinaten in die Auffelderung mit einbeziehen, was in dem Optimierungsalgorithmus zu Beginn entschieden wird. In Fig. 7 wurde auf alle Koordinaten aufgefeldert. Wird die freie Netzausgleichung zum Beispiel im Smartphone 10 und seinem Mikroprozessor 19 durchgeführt, so kann der Mikroprozessor, um ein absolut betrachtet plausibles Koordinatensystem als Berechnungskoordinatensystem zu erhalten, eine Vorverarbeitung starten, um sich geeignete Näherungswerte für die Koordinaten der an der Auffelderung zu beteiligenden Smartphones zu beschaffen oder zu berechnen. Hierzu benötigt er erste Näherungskoordinaten und nach Möglichkeit auch zusätzliche Messungen.

Diese Form der Netzausgleichung kann auch dann angewendet werden, wenn eines oder mehrere der beweglichen Smartphones des vorliegenden Beispiels dauerhaft ortsfeste Kommunikationseinrichtungen mit angeblich hoher Positionsgenauigkeit sind, aber diesen Angaben nicht vertraut wird und nur die relative Lage zu anderen beweglichen Kommunikationseinrichtungen von Interesse ist. Alle Näherungskoordinaten, auf die aufgefeldert wird, erhalten in der Netzausgleichung Korrekturen zu den Koordinaten und neu berechnete Genauigkeiten.

Einige Gesichtspunkte werden nachfolgend noch einmal zusammengestellt, wobei die darin verwendeten Bezugszeichen nur der besseren Lesbarkeit dienen und nicht den Gegenstand der von den Ansprüchen definierten Erfindung beschränken.

Gemäß einem Aspekt kann ein Verfahren zum Bestimmen der Position wenigstens einer beweglichen Kommunikationseinrichtung eines drahtlosen Kommunikationsnetzes verfügbar gemacht werden, welches folgende Schritte aufweisen kann:
Bestimmen wenigstens eines Beobachtungswertes, der die relative Lage zwischen einer ersten, beweglichen Kommunikationseinrichtung 10 oder 190 und einer zweiten Kommunikationseinrichtung 20 oder 200 definiert;
Bereitstellen einer Positionsinformation, welche die Position der zweiten Kommunikationseinrichtung 20 oder 200 festlegt, wobei die Positionsinformation Angaben über die Positionskoordinaten und deren Genauigkeit enthält;
Bestimmen der Positionskoordinaten der ersten, beweglichen Kommunikationseinrichtung 10 oder 190 und die Genauigkeit der Positionskoordinaten in Abhängigkeit von dem Beobachtungswert und der Positionsinformation der zweiten Kommunikationseinrichtung 20 oder 200.

Mit dem Ausdruck "Bestimmen einer Position" werden auch die Fälle, nach denen erstmalig eine Position bestimmt oder eine aktuelle Position verbessert wird, mit erfasst.

Dank der Verwendung von Beobachtungswerten, d. h. geometrischer Relationen beweglicher Kommunikationseinrichtungen und der Verwendung von Positionsinformationen der zweiten Kommunikationseinrichtung kann die Position der ersten, beweglichen Kommunikationseinrichtung auch dann bestimmt werden, wenn die erste, bewegliche Kommunikationseinrichtung über keinen eigenen GNSS-fähigen Empfänger und zugleich keinen Bewegungssensor verfügt.

Gemäß einem weiteren Aspekt wird ein Verfahren zum Bestimmen der Position wenigstens einer beweglichen Kommunikationseinrichtung 10 eines drahtlosen Kommunikationsnetzes zur Verfügung gestellt, welches folgende Schritte aufweist:
a1) Bestimmen eines Beobachtungswertes, der die relative Lage zwischen einer ersten, beweglichen Kommunikationseinrichtung 10 bzw. 190 und einer zweiten Kommunikationseinrichtung 20 bzw. 200 definiert,
a2) Bestimmen eines weiteren Beobachtungswertes, der die relative Lage zwischen der ersten, beweglichen Kommunikationseinrichtung 10 und wenigstens einer weiteren Kommunikationseinrichtung 30, 40, 210 bis 250 definiert, und/oder Bestimmen eines weiteren Beobachtungswertes, der die relative Lage zwischen der zweiten beweglichen Kommunikationseinrichtung 20 und der wenigstens einen weiteren Kommunikationseinrichtung 30 oder 40 definiert;
b) Bereitstellen einer Positionsinformation, welche die Position der zweiten Kommunikationseinrichtung 20 bzw. 200 festlegt, wobei die Positionsinformation Angaben über die Positionskoordinaten und deren Genauigkeit enthält, und Bereitstellen für die wenigstens eine weitere Kommunikationseinrichtung 30, 40 einer Positionsinformation, welche die Position der wenigstens einen weiteren Kommunikationseinrichtung 30, 40 festlegt, wobei die Positionsinformation Angaben über die Positionskoordinaten und deren Genauigkeit enthält;
c) Ausführen eines Optimierungsalgorithmus zur Schätzung der Positionskoordinaten der ersten beweglichen Kommunikationseinrichtung und der Genauigkeit der Positionskoordinaten in Abhängigkeit von dem Beobachtungswert, von dem wenigstens einen weiteren Beobachtungswert, der Positionsinformation der zweiten Kommunikationseinrichtung 20 und von der Positionsinformation der wenigstens einen weiteren Kommunikationseinrichtung 30, 40, wobei der Optimierungsalgorithmus auf einer Netzausgleichung basiert, wobei die erste, bewegliche Kommunikationseinrichtung 10, die zweite Kommunikationseinrichtung 20 und die wenigstens eine weitere Kommunikationseinrichtung 30, 40 ein temporär stabiles geometrisches Lagenetz bilden und die Positionen jeder der Kommunikationseinrichtungen 20 bis 40 in der Ausgleichung bei Bedarf mit bestimmt werden können.

Der Ausdruck "temporär stabiles geometrisches Lagenetz" bedeutet vorzugsweise, dass die Positionskoordinaten der beteiligten Kommunikationseinrichtungen, welche die Lagepunkte des Lagenetzes bilden, die Beobachtungswerte und gegebenenfalls deren Genauigkeiten, welche als Größen in der Netzausgleichung verwendet werden, im Wesentlichen zu einem einzigen vorbestimmten Gültigkeitszeitpunkt bestimmt bzw. gemessen werden oder zumindest ausreichend genau auf diesen Zeitpunkt korrigiert wurden.

Der Begriff "temporär" deutet ferner vorzugsweise darauf hin, dass die beteiligten Kommunikationseinrichtungen wenigstens während der Messzeitpunkte der Beobachtungen und Eingabegrößen zur Ausführung der Netzausgleichung zur Berechnung der Position der beweglichen Kommunikationseinrichtung als Lagepunkte eines geometrischen Netzwerkes betrachtet werden können.

Ein "temporär stabiles geometrisches Lagenetz" liegt zum Beispiel auch immer dann vor, wenn alle Größen im Wesentlichen für den gleichen Zeitpunkt gelten, obwohl einzelne Kommunikationseinrichtungen beweglich sind.

Die Position einer Kommunikationseinrichtung wird vorzugsweise durch die Positionskoordinaten und deren Genauigkeit festgelegt. Die Genauigkeit wiederum wird vorzugsweise durch die Standardabweichung definiert.

Die erste, bewegliche Kommunikationseinrichtung 10, die zweite Kommunikationseinrichtung 20 und wenigstens eine weitere Kommunikationseinrichtung 30 und/oder 40 bilden temporär eine Gruppe, die als eine Art ad-hoc-Netz betrachtet werden kann.

Ist zumindest die zweite Kommunikationseinrichtung 20 eine bewegliche Kommunikationseinrichtung, kann der Optimierungsalgorithmus auf einer Netzausgleichung basieren, die bei Bedarf auch die Position der zweiten beweglichen Kommunikationseinrichtung neu berechnet.

Gemäß einem weiteren Aspekt der Erfindung werden vorzugsweise in Schritt a) der Beobachtungswert, der die relative Lage zwischen einer ersten, beweglichen Kommunikationseinrichtung 10 bzw. 190 und einer zweiten Kommunikationseinrichtung 20 bzw. 200 definiert, und der eine weitere Beobachtungswert, der die relative Lage zwischen der ersten, beweglichen Kommunikationseinrichtung 10 und der wenigstens einen weiteren Kommunikationseinrichtung 30, 40 definiert, bestimmt. Zudem werden die zweite Kommunikationseinrichtung 20 und die wenigstens eine weitere Kommunikationseinrichtung 30, 40 zumindest während der Ausführung des Optimierungsalgorithmus teilweise oder vollständig als statische unter Zwang festgelegte Kommunikationseinrichtungen bezüglich wenigstens einer Koordinatenrichtung behandelt, sodass ein wenigstens in der einen Koordinate starres Koordinatensystems unter Zwang definiert wird. Der Optimierungsalgorithmus basiert dann auf einer geometrischen Netzausgleichung unter Verwendung des wenigstens in der einen Koordinate unter Zwang festgelegten Koordinatensystems.

Der Begriff "statische Kommunikationseinrichtung" erfasst vorzugsweise ortsfeste Kommunikationseinrichtungen oder auch bewegliche Kommunikationseinrichtungen, die temporär wie statische Kommunikationseinrichtung behandelt werden können, also in der Regel derart hochgenau in wenigsten einer ihrer Koordinaten bekannt sind, dass die Standardabweichung dieser mindestens einen Koordinate im Ausgleichungsprozess ausreichend genau zu Null gesetzt werden kann.

Gemäß einem weiteren Aspekt der Erfindung können vorzugsweise in Schritt a) Beobachtungswerte, die die relative Lage zwischen einer ersten, beweglichen Kommunikationseinrichtung 10 bzw. 190 und mindestens zwei weiteren Kommunikationseinrichtung aus 20 bis 40 und 210 bis 250 bestimmt werden, in Schritt b) keine oder einige der Koordinaten einiger oder keiner der Kommunikationseinrichtungen 190, 10 bis 40 und 210 bis 250 und deren Genauigkeiten bestimmt und an die Kommunikationseinrichtung 10 bzw. 190 übertragen werden, in Schritt c) in der Kommunikationseinrichtung 10 oder 190 eine freie Netzausgleichung als Optimierungsalgorithmus ausgeführt werden, der die Koordinaten und deren Genauigkeiten der in der freien Netzausgleichung als verbesserbare Unbekannten definierten Koordinaten bestimmt, wobei bei der Netzausgleichung alle oder nur einige der das Koordinatensystem definierenden Positionen ohne Zwang und ohne stochastische Festlegung bestimmt werden und die jeweiligen bestimmten Positionen und Genauigkeiten bei Bedarf jeder beteiligten Kommunikationseinrichtung übermittelt werden können, wobei zweckmäßiger Weise die Kommunikationseinrichtung 10 bzw. 190 entscheidet, wie das Berechnungskoordinatensystem der freien Netzausgleichung definiert wird.

Zweckmäßigerweise wird der wenigstens eine, in Schritt a) bestimmte Beobachtungswert in der ersten, beweglichen Kommunikationseinrichtung 10 bzw. 190 verfügbar gemacht. Schritt b) enthält das Übertragen der Positionsinformation, welche die Position der zweiten Kommunikationseinrichtung 20 bzw. 200 festlegt, von der zweiten Kommunikationseinrichtung 20 bzw. 200 zur ersten, beweglichen Kommunikationseinrichtung 10 bzw. 190, wobei Schritt c) in der ersten, beweglichen Kommunikationseinrichtung (10; 190) ausgeführt wird.

Alternativ wird der wenigstens eine, in Schritt a) bestimmte Beobachtungswert in einer zentralen Einrichtung 120 verfügbar gemacht, wobei Schritt b) das Übertragen der Positionsinformation, welche die Position der zweiten Kommunikationseinrichtung (20) festlegt, von der zweiten Kommunikationseinrichtung zur zentralen Einrichtung (120) enthält, und Schritt c) in der zentralen Einrichtung 120 ausgeführt wird, wobei die in Schritt c) bestimmten Positionskoordinaten und deren Genauigkeit zur ersten, beweglichen Kommunikationseinrichtung 10 und bei Bedarf auch zu den anderen Kommunikationseinrichtungen übertragen werden.

Vorteilhafterweise kann Schritt a) das Messen wenigstens einer Messgröße zur Bestimmung des wenigstens einen ersten Beobachtungswertes enthalten, wobei der wenigstens eine erste Beobachtungswert Angaben über den räumlichen Abstand und/oder den Winkel und/oder die horizontale Richtung und/oder den Zenitwinkel zwischen der ersten, beweglichen Kommunikationseinrichtung 10 und der zweiten Kommunikationseinrichtung 20 enthält, wobei die wenigstens eine Messgröße in der ersten, beweglichen Kommunikationseinrichtung 10 und/oder in der zweiten Kommunikationseinrichtung 20 oder in einer weiteren Kommunikationseinrichtung 30, 40, 190 gemessen werden kann.

Zweckmäßigerweise ist jedem Beobachtungswert ein Gültigkeitszeitpunkt zugeordnet und jede Positionsinformation enthält einen Gültigkeitszeitpunkt, wobei in Schritt c) für die erste, bewegliche Kommunikationseinrichtung 10 die Positionskoordinaten, deren Genauigkeit und der dazugehörende Gültigkeitszeitpunkt bestimmt werden.

Zweckmäßigerweise werden in Schritt c) ferner die Positionskoordinaten und die Genauigkeit der Positionskoordinaten der zweiten Kommunikationseinrichtung 20 und/oder, sofern die wenigstens eine weiteren Kommunikationseinrichtung 30, 40 eine nicht unter Zwang fehlerfrei bekannt angenommene Kommunikationseinrichtung ist, auch deren Positionskoordinaten und die Genauigkeit der Positionskoordinaten mittels der Netzausgleichung bestimmt, wobei die jeweiligen Positionskoordinaten und deren Genauigkeit zur zweiten Kommunikationseinrichtung 20 und/oder zu der wenigstens einen weiteren Kommunikationseinrichtung 30, 40 übertragen werden, und wobei in der zweiten Kommunikationseinrichtung 20 und/oder in der wenigstens einen weiteren Kommunikationseinrichtung 30, 40 die jeweilige, mittels der Netzausgleichung bestimmte Position als aktuelle Position übernommen werden kann.

Vorteilhafterweise kann in Schritt c) ferner der Gültigkeitszeitpunkt der jeweiligen Positionskoordinaten bestimmt werden, und/oder Schritt c) unter Ansprechen auf einen Anforderungsbefehl der zweiten Kommunikationseinrichtung 20 und/oder der wenigstens einen weiteren Kommunikationseinrichtung 30, 40 und/oder der zentralen Einrichtung 120 ausgeführt werden.

Vorteilhafterweise wird in der ersten, beweglichen Kommunikationseinrichtung 10 eine Positionsinformation unter Ausführung eines Positions-Bestimmungsprogramms, welches auf einem Ortungsverfahren, insbesondere einem GNSS-basierten oder einem WLAN-basierten Ortungsverfahren und/oder einem Bewegungssensor basiert, ermittelt, wobei die Positionsinformation Angaben über die Positionskoordinaten der ersten, beweglichen Kommunikationseinrichtung 10 und die Genauigkeit der Positionskoordinaten enthält, und wobei in Schritt c) die Positionsinformation der ersten, beweglichen Kommunikationseinrichtung 10 in der Netzausgleichung mit verarbeitet wird.

Vorteilhafterweise werden wenigstens in der ersten, beweglichen Kommunikationseinrichtung 10 unterschiedliche Optimierungsalgorithmen zur Schätzung von PositionsKoordinaten und deren Genauigkeiten gespeichert, wobei ein auszuführender Optimierungsalgorithmus unter Ansprechen auf eine vorbestimmte Bedingung ausgewählt wird.

Es ist vorteilhaft, wenn die erste, bewegliche Kommunikationseinrichtung 10, die zweite Kommunikationseinrichtung 20 und die wenigstens eine weitere Kommunikationseinrichtung 30, 40 unter vorbestimmbaren Kriterien ausgewählt werden und/oder die Positionsinformation in der zweiten Kommunikationseinrichtung 20 und/oder der wenigstens einen weiteren Kommunikationseinrichtung 30, 40 unter Ausführung eines Positions-Bestimmungsprogramms, welches auf einem Ortungsverfahren, insbesondere einem GNSS-basierten oder einem WLAN-basierten Ortungsverfahren und/oder einem Bewegungssensor basiert, ermittelt wird.

Zweckmäßigerweise wird die Ausführung der Schritte a) und/oder b) und/oder c) unter Steuerung der ersten, beweglichen Kommunikationseinrichtung 10 oder der zentralen Einrichtung 120 ausgeführt, und/oder die Positionsinformation der zweiten Kommunikationseinrichtung (200) wird mittels eines Nahfeld-Kommunikationsprotokolls von der zweiten Kommunikationseinrichtung (200) zur ersten, beweglichen Kommunikationseinrichtung (190) übertragen, wobei der Beobachtungswert durch das verwendete Nahfeld-Kommunikationsprotokoll festgelegt wird.

Die Positionsinformationen und/oder Beobachtungswerte und/oder Gültigkeitszeitpunkte können zwischen den Kommunikationseinrichtungen mittels eines Kommunikationsprotokolls zur drahtlosen Datenübermittlung, insbesondere dem standardisierten Wi-Fi Direct-Protokoll, ausgetauscht werden.

Gemäß einem weiteren Aspekt wird eine bewegliche, drahtlose Kommunikationseinrichtung 10 zum Einsatz in einem drahtlosen Kommunikationsnetz 5, 5', 150, 150' geschaffen, welches eine drahtlose Datenkommunikationsschnittstelle 14 aufweist, wobei die drahtlose Datenkommunikationsschnittstelle 14 zum Empfangen wenigstens einer Positionsinformation, welche die Position einer anderen Kommunikationseinrichtung 20, 30, 40, 190, 210-250 definiert, ausgebildet ist, wobei die Positionsinformation Angaben über die Positionskoordinaten und deren Genauigkeit enthält. Ferner ist eine Speichereinrichtung 11 zum Ablegen wenigstens eines Beobachtungswertes, der die relative Lage zwischen zwei Kommunikationseinrichtungen 10, 20, 30, 40, 190, 210-250 definiert, und eine programmierbare Steuereinrichtung 18 vorgesehen, die dazu ausgebildet ist, die Positionskoordinaten der beweglichen, drahtlosen Kommunikationseinrichtung 10 sowie die Genauigkeit der Positionskoordinaten in Abhängigkeit von dem wenigstens einen Beobachtungswert und der wenigstens einen Positionsinformation der anderen Kommunikationseinrichtung 20, 30, 40, 190, 210-250 zu bestimmen.

Die programmierbare Steuereinrichtung 18 ist ferner zum Ausführen wenigstens eines Optimierungsalgorithmus zum Schätzen der Positionskoordinaten der beweglichen, drahtlosen Kommunikationseinrichtung 10 und der Genauigkeit der Positionskoordinaten in Abhängigkeit von der Positionsinformation von wenigstens zwei anderen Kommunikationseinrichtung 20, 30, 40, 190, 210-250 wenigstens zwei Beobachtungswerten und gegebenenfalls in Abhängigkeit von der Positionsinformation der beweglichen, drahtlosen Kommunikationseinrichtung 10 ausgebildet, wobei der wenigstens eine Optimierungsalgorithmus auf einer Netzausgleichung unter Zwang und/oder stochastischen Festlegung des Koordinatensystems oder auf einer freien Netzausgleichung basiert.

Die bewegliche, drahtlose Kommunikationseinrichtung kann vorteilhafter Weise wenigstens eine Messeinrichtung 17 zum Messen einer Messgröße und eine Auswerteeinrichtung 16 aufweisen, die dazu ausgebildet ist, in Abhängigkeit von der gemessenen Messgröße einen Beobachtungswert zu bestimmen, der die relative Lage zwischen zwei Kommunikationseinrichtungen 190, 10-40, 210-250 definiert. Die bewegliche Kommunikationseinrichtung 10 kann zusätzlich oder alternativ einen GNSS-fähigen Empfänger 15 aufweisen, der zum Empfangen von Positionssignalen ausgebildet ist, um daraus eine Positionsinformation zu bestimmen, die Positionskoordinaten der beweglichen, drahtlosen Kommunikationseinrichtung und die Genauigkeit der Positionskoordinaten enthält. Die bewegliche Kommunikationseinrichtung 10 kann zusätzlich oder alternativ einen Bewegungssensor 9 aufweisen, der Signale zur Bestimmung von relativen Bewegungen erfassen kann, um daraus eine Positionsinformation zu bestimmen, die Positionskoordinaten der beweglichen, drahtlosen Kommunikationseinrichtung und die Genauigkeit der Positionskoordinaten enthält.

Die programmierbare Steuereinrichtung 18 kann vorteilhafter Weise dazu ausgebildet sein, die Positionskoordinaten der wenigstens zwei anderen Kommunikationseinrichtungen 20, 30, 40, 190, 210-250 sowie die Genauigkeit der jeweiligen Positionskoordinaten zu bestimmen, wobei die drahtlose Datenkommunikationsschnittstelle 14 zum Senden der Positionskoordinaten und deren Genauigkeit zu der jeweiligen anderen Kommunikationseinrichtung ausgebildet sein kann.

Zweckmäßigerweise wird die Steuereinrichtung 18 und/oder 121 zum mehrmaligen Ausführen des Optimierungsalgorithmus und zur anschließenden Ausführung einer Blockausgleichung ausgebildet sein.

Zweckmäßigerweise wird die Steuereinrichtung 18 und/oder 121 zum Ausführen eines Algorithmus und zur anschließenden Ähnlichkeitstransformation der Ergebnisse einer Netzausgleichung in ein anderes Koordinatensystem ausgebildet sein, wobei Koordinaten und deren Genauigkeiten streng transformiert werden können.

Vorteilhafter Weise kann jedem Beobachtungswert ein Gültigkeitszeitpunkt zugeordnet sein und die Positionsinformationen kann jeweils einen Gültigkeitszeitpunkt enthalten, wobei die Steuereinrichtung 18 dazu ausgebildet sein kann, die Positionskoordinaten der beweglichen, drahtlosen Kommunikationseinrichtung 10 und gegebenenfalls die Positionskoordinaten der wenigstens zwei anderen Kommunikationseinrichtung 20, 30, 40, 190, 210-250 sowie die jeweilige die Genauigkeit der Positionskoordinaten und einen Gültigkeitszeitpunkt zu bestimmen.

Nach einem weiteren Gesichtspunkt ist eine zentrale, drahtlose Kommunikationseinrichtung 120 zum Bestimmen der Position wenigstens einer beweglichen, drahtlosen Kommunikationseinrichtung vorgesehen, welche eine drahtlose Datenkommunikationsschnittstelle 122 aufweist, die zum Empfangen von Positionsinformationen von wenigstens zwei anderen Kommunikationseinrichtungen 10-40, 190 ausgebildet ist, wobei die Positionsinformationen jeweils die Position der wenigstens einen anderen Kommunikationseinrichtung 10-40, 190, 210-250 definiert und Angaben über die Positionskoordinaten und deren Genauigkeit enthält, und die ferner zum Empfangen von

Beobachtungswerten, die jeweils die relative Lage zwischen zwei Kommunikationseinrichtungen definieren, ausgebildet ist. Ferner weist die zentrale Kommunikationseinrichtung 120 eine programmierbare Steuereinrichtung 121 auf, welche zum Ausführen wenigstens eines Optimierungsalgorithmus zum Schätzen der Positionskoordinaten der beweglichen, drahtlosen Kommunikationseinrichtung 10 und der Genauigkeit der Positionskoordinaten in Abhängigkeit von den Positionsinformationen der wenigstens zwei anderen Kommunikationseinrichtungen 20, 30, von wenigstens zwei Beobachtungswerten und gegebenenfalls in Abhängigkeit von der Positionsinformation der beweglichen, drahtlosen Kommunikationseinrichtung 10 ausgebildet ist, wobei der wenigstens eine Optimierungsalgorithmus auf einer Netzausgleichung unter Zwang und/oder stochastischen Festlegung des Koordinatensystems oder auf einer freien Netzausgleichung basiert, und wobei die drahtlose Datenkommunikationsschnittstelle 122 zum Senden der Positionskoordinaten und deren Genauigkeit zur beweglichen, drahtlosen Kommunikationseinrichtung 10 ausgebildet ist.

Die programmierbare Steuereinrichtung 121 kann dazu ausgebildet sein, die Positionskoordinaten der wenigstens zwei anderen Kommunikationseinrichtungen 20, 30 sowie die Genauigkeit der jeweiligen Positionskoordinaten zu bestimmen, wobei die drahtlose Datenkommunikationsschnittstelle 122 zum Senden der Positionskoordinaten und deren Genauigkeit zu der jeweiligen anderen Kommunikationseinrichtung 20, 30 ausgebildet sein kann. Zusätzlich oder alternativ kann die programmierbare Steuereinrichtung 121 zum mehrmaligen Ausführen des wenigstens einen Optimierungsalgorithmus und zur anschließenden Ausführung einer Blockausgleichung ausgebildet sein. Zusätzlich kann die programmierbare Steuereinrichtung 121 zum anschließenden Ausführen eines Algorithmus zur Transformation der Netzausgleichungsergebnisse in ein anderes Zielkoordinatensystem ausgebildet sein, wobei Koordinaten und deren Genauigkeiten streng transformiert werden.

Jedem Beobachtungswert kann ein Gültigkeitszeitpunkt zugeordnet sein und die Positionsinformationen kann jeweils einen Gültigkeitszeitpunkt enthalten, wobei die programmierbare Steuereinrichtung 121 dazu ausgebildet sein kann, die Positionskoordinaten der beweglichen, drahtlosen Kommunikationseinrichtung 10 und gegebenenfalls die Positionskoordinaten der wenigstens zwei anderen Kommunikationseinrichtung 20, 30 sowie die jeweilige die Genauigkeit der Positionskoordinaten und einen Gültigkeitszeitpunkt zu bestimmen.

Gemäß einem weiteren Aspekt wird ein Computerprogramm geschaffen, welches eine Vielzahl von Anweisungen enthält, die in mehreren drahtlosen Kommunikationseinrichtungen 10-40, 120, 190, 210-250 von denen wenigstens eine als drahtlose, bewegliche Kommunikationseinrichtung 10-40, 210-250 ausgebildet ist, speicherbar sind, wobei die Anweisungen, wenn sie von einem Mikroprozessor 18 der wenigstens einen beweglichen Kommunikationseinrichtung 10 und dem Mikroprozessor einer weiteren der drahtlosen Kommunikationseinrichtungen 20-40, 120, 190, 210-250 ausgelesen und verarbeitet werden, das oben beschriebene Verfahren ausführen, wodurch es einem System an drahtlosen Kommunikationseinrichtungen 10-40, 190, 210-250 mit diesem implementierten Computerprogramm ermöglicht wird ihre Positionskoordinaten und deren Genauigkeiten gegenüber den bisher bekannten Verfahren zu verbessern und in vorgegebenen Zielkoordinatensystemen oder beliebigen reinen Berechnungskoordinatensystemen darzustellen und dieses automatisiert ohne manuelle Vorgaben durchzuführen.

Gemäß einem weiteren Aspekt kann selbst die bisher mindestens eine bewegliche Kommunikationseinrichtung 10 eine fest montierte statische Kommunikationseinrichtung sein und ihre Koordinaten können in der Netzausgleichung trotzdem wie eine bewegliche Kommunikationseinrichtung mit erstmalig zu bestimmenden oder zu verbessernden Koordinaten behandelt werden.

Eine exakte Synchronisation aller Messungen, d. h. der Messungen der Positionen als auch der relativen Lage zwischen zwei Kommunikationseinrichtungen ist erforderlich. Hierzu können die beteiligten Kommunikationseinrichtungen einen in der Zukunft liegenden Gültigkeitszeitpunkt vereinbaren. Alternativ kann, wenn bereits zahlreiche Positionsinformationen und Beobachtungswerte zu unterschiedlichen Zeitpunkten vorliegen, ein geeigneter Gültigkeitszeitpunkt in an sich bekannter Weise durch Interpolation oder Extrapolation berechnet werden. Maßnahmen zur Synchronisation der Messungen und zur Durchführung der Interpolation oder Extrapolation sind nicht Gegenstand der Erfindung.

Die Netzausgleichung basierend auf einem unter Zwang und/oder stochastisch vorbestimmten Koordinatensystem oder die freie Netzausgleichung können auf der Methode der kleinsten Fehlerquadrate basieren.

Der Optimierungsalgorithmus, der eine Netzausgleichung ausführt, kann auf einem funktionalen und statistischen Modell, insbesondere einem Gauß-Markov-Modell oder einem heuristischen Modell basieren.

Für die Netzausgleichung können auch andere Modelle, als Das Gauß-Markov-Modell verwendet werden.

Die programmierbare Steuereinrichtung kann zum mehrmaligen Ausführen des Optimierungsalgorithmus und zur anschließenden Ausführung einer Blockausgleichung ausgebildet sein und/oder einer Transformation der Netzausgleichungsergebnisse in ein anderes vorgegebenes Zielkoordinatensystem ausgebildet sein.

## Patentansprüche

1. Verfahren zum Ausführen in einem Prozessor einer beweglichen Kommunikationseinrichtung eines drahtlosen Kommunikationsnetzes zum Verbessern einer in der beweglichen Kommunikationseinrichtung mittels GPS-Empfänger bestimmten aktuellen Position der beweglichen Kommunikationseinrichtung (10), mit folgenden Schritten:
a0) Abschätzen, anhand einer Genauigkeit, die in einer für eine zweite Kommunikationseinrichtung bereitgestellten Positionsinformation enthalten ist, und einer Genauigkeit, die in einer für wenigstens eine weitere Kommunikationseinrichtung bereitgestellten Positionsinformation enthalten ist, ob die aktuelle Position einer ersten beweglichen Kommunikationseinrichtung verbessert werden kann,
a1) Bestimmen für einen bestimmten Gültigkeitszeitpunkt eines Beobachtungswertes, der die relative Lage zwischen der ersten, beweglichen Kommunikationseinrichtung (10; 190) und der zweiten beweglichen Kommunikationseinrichtung (20; 200) definiert,
a2) Bestimmen für den bestimmten Gültigkeitszeitpunkt eines weiteren Beobachtungswertes, der die relative Lage zwischen der ersten, beweglichen Kommunikationseinrichtung (10; 190) und der wenigstens einen weiteren beweglichen Kommunikationseinrichtung (30, 40, 190, 210-250) definiert, und/oder Bestimmen für den bestimmten Gültigkeitszeitpunkt eines weiteren Beobachtungswertes, der die relative Lage zwischen der zweiten beweglichen Kommunikationseinrichtung (20; 200) und der wenigstens einen weiteren beweglichen Kommunikationseinrichtung (40) definiert;
b) Bereitstellen einer Positionsinformation, welche die Position der zweiten
Kommunikationseinrichtung (20) zum bestimmten Gültigkeitszeitpunkt festlegt, wobei die Positionsinformation Angaben über die Positionskoordinaten und deren Genauigkeit enthält, und
Bereitstellen für die wenigstens eine weitere Kommunikationseinrichtung (30, 40, 190, 210-250) einer Positionsinformation, welche die Position der wenigstens einen weiteren Kommunikationseinrichtung (30, 40, 190, 210-250) für den bestimmten Gültigkeitszeitpunkt festlegt, wobei die Positionsinformation Angaben über die Positionskoordinaten und deren Genauigkeit enthält;
c) Ausführen eines Optimierungsalgorithmus zur Schätzung der Positionskoordinaten der ersten beweglichen Kommunikationseinrichtung (10) und der Genauigkeit der Positionskoordinaten in Abhängigkeit von dem in Schritt a1) bestimmten Beobachtungswert, von dem wenigstens einen weiteren in Schritt a2) bestimmten Beobachtungswert, von der in Schritt b) bereitgestellten Positionsinformation der zweiten Kommunikationseinrichtung (20) und von der in Schritt b) bereitgestellten Positionsinformation der wenigstens einen weiteren Kommunikationseinrichtung (30, 40, 190, 210-250), wobei der Optimierungsalgorithmus auf einer freien Netzausgleichung basiert, und Durchführen einer Koordinatensystemtransformation der geschätzten Positionskoordinaten in ein anderes vorgegebenes Zielkoordinatensystem, wobei die erste, bewegliche Kommunikationseinrichtung (10), die zweite Kommunikationseinrichtung (20) und die wenigstens eine weitere Kommunikationseinrichtung (30, 40, 190, 210-250) ein temporäres geometrisches Lagenetz bilden.

2. Verfahren nach Anspruch 1
**dadurch gekennzeichnet, dass**
der wenigstens eine, in Schritt a) bestimmte Beobachtungswert in der ersten, beweglichen Kommunikationseinrichtung (10) verfügbar gemacht wird,
Schritt b) das Übertragen der Positionsinformation, welche die Position der zweiten Kommunikationseinrichtung (20) festlegt, von der zweiten Kommunikationseinrichtung (20) zur ersten, beweglichen Kommunikationseinrichtung (10) enthält, und dass
Schritt c) in der ersten, beweglichen Kommunikationseinrichtung (10) ausgeführt wird, oder **dadurch gekennzeichnet, dass**
der wenigstens eine, in Schritt a) bestimmte Beobachtungswert in einer zentralen Einrichtung (120) verfügbar gemacht wird,
Schritt b) das Übertragen der Positionsinformation, welche die Position der zweiten Kommunikationseinrichtung (20) festlegt, von der zweiten Kommunikationseinrichtung zur zentralen Einrichtung (120) enthält, und dass Schritt c) in der zentralen Einrichtung (120) ausgeführt wird, wobei die in Schritt c) bestimmten Positionskoordinaten und deren Genauigkeit zur ersten, beweglichen Kommunikationseinrichtung (10) übertragen werden.

3. Verfahren nach einem der vorstehenden Ansprüche, **dadurch gekennzeichnet, dass**
Schritt a) das Messen wenigstens einer Messgröße zur Bestimmung des wenigstens einen ersten Beobachtungswertes enthält, und dass der wenigstens eine erste Beobachtungswert Angaben über den räumlichen Abstand und/oder den Winkel und/oder die horizontale Richtung und/oder den Zenitwinkel zwischen der ersten und der zweiten beweglichen Kommunikationseinrichtung enthält, wobei die wenigstens eine Messgröße in der ersten, beweglichen Kommunikationseinrichtung (10) und/oder in der zweiten beweglichen Kommunikationseinrichtung (20) oder in der wenigstens einen weiteren beweglichen Kommunikationseinrichtung (30, 40, 190, 210-250) gemessen werden kann.

4. Verfahren nach einem der vorstehenden Ansprüche, **dadurch gekennzeichnet, dass**
jedem Beobachtungswert ein Gültigkeitszeitpunkt zugeordnet ist und jede Positionsinformation einen Gültigkeitszeitpunkt enthält, und dass in Schritt c) für die erste, bewegliche Kommunikationseinrichtung (10) die Positionskoordinaten, deren Genauigkeit und der dazugehörende Gültigkeitszeitpunkt bestimmt werden.

5. Verfahren nach einem der vorstehenden Ansprüche, **dadurch gekennzeichnet, dass**
in Schritt c) ferner die Positionskoordinaten und die Genauigkeit der Positionskoordinaten der zweiten beweglichen Kommunikationseinrichtung (20) und/oder der wenigstens einen weitere beweglichen Kommunikationseinrichtung (30, 40, 190, 210-250), deren Positionskoordinaten nicht exakt bestimmt sind, auch deren Positionskoordinaten und die Genauigkeit der Positionskoordinaten mittels der freien Netzausgleichung bestimmt werden, dass die jeweiligen Positionskoordinaten und deren Genauigkeit zur zweiten beweglichen Kommunikationseinrichtung (20) und/oder zu der wenigstens einen weiteren beweglichen Kommunikationseinrichtung (30, 40, 190, 210-250) übertragen werden, und dass
in der zweiten beweglichen Kommunikationseinrichtung (20) und/oder in der wenigstens einen weiteren beweglichen Kommunikationseinrichtung (30, 40, 190, 210-250) die jeweilige, mittels der freien Netzausgleichung bestimmte Position als aktuelle Position übernommen werden kann.

6. Verfahren nach einem der vorstehenden Ansprüche, **dadurch gekennzeichnet, dass**
in Schritt c) ferner der Gültigkeitszeitpunkt der jeweiligen Positionskoordinaten bestimmt werden kann, und/oder dass
Schritt c) unter Ansprechen auf einen Anforderungsbefehl der zweiten beweglichen Kommunikationseinrichtung (20) und/oder der wenigstens einen weiteren beweglichen Kommunikationseinrichtung (30, 40, 190, 210-250) und/oder der zentralen Einrichtung (120) ausgeführt werden kann.

7. Verfahren nach einem der vorstehenden Ansprüche, **dadurch gekennzeichnet, dass**
in der ersten, beweglichen Kommunikationseinrichtung (10) eine Positionsinformation unter Ausführung eines Positions-Bestimmungsprogramms, welches auf einem Ortungsverfahren, insbesondere einem GNSS-basierten oder einem WLAN-basierten Ortungsverfahren basiert, ermittelt wird, wobei die Positionsinformation Angaben über die Positionskoordinaten der ersten, beweglichen Kommunikationseinrichtung (10) und die Genauigkeit der Positionskoordinaten enthält, und dass
in Schritt c) die Positionsinformation der ersten, beweglichen Kommunikationseinrichtung (10) in der Netzausgleichung mit verarbeitet wird.

8. Verfahren nach einem der vorstehenden Ansprüche, **dadurch gekennzeichnet, dass**
wenigstens in der ersten, beweglichen Kommunikationseinrichtung (10) unterschiedliche Optimierungsalgorithmen zur Schätzung von PositionsKoordinaten und deren Genauigkeiten gespeichert werden, und dass
ein auszuführender Optimierungsalgorithmus unter Ansprechen auf eine vorbestimmte Bedingung ausgewählt wird.

9. Verfahren nach einem der vorstehenden Ansprüche, **dadurch gekennzeichnet, dass**
die erste, bewegliche Kommunikationseinrichtung (10), die zweite bewegliche Kommunikationseinrichtung (20) und die wenigstens eine weitere bewegliche Kommunikationseinrichtung (30, 40, 190, 210-250) unter vorbestimmbaren Kriterien ausgewählt werden und/oder dass die Positionsinformation in der zweiten beweglichen Kommunikationseinrichtung (20) und/oder der wenigstens einen weiteren beweglichen Kommunikationseinrichtung (30, 40) unter Ausführung eines Positions-Bestimmungsprogramms, welches auf einem Ortungsverfahren, insbesondere einem GNSS-basierten oder einem WLAN-basierten Ortungsverfahren basiert, ermittelt wird.

10. Verfahren nach einem der vorstehenden Ansprüche, **dadurch gekennzeichnet, dass**
die Positionsinformation der zweiten beweglichen Kommunikationseinrichtung (200) mittels eines Nahfeld-Kommunikationsprotokolls von der zweiten beweglichen Kommunikationseinrichtung (200) zur ersten, beweglichen Kommunikationseinrichtung (190) übertragen wird, und dass der Beobachtungswert durch das verwendete Nahfeld-Kommunikationsprotokoll festgelegt wird.

11. Verfahren nach einem der vorstehenden Ansprüche,
**dadurch gekennzeichnet, dass**
die Positionsinformationen und/oder Beobachtungswerte und/oder Gültigkeitszeitpunkte zwischen den Kommunikationseinrichtungen mittels eines Kommunikationsprotokolls zur drahtlosen Datenübermittlung, insbesondere dem standardisierten Wi-Fi Direct-Protokoll, ausgetauscht werden können.

12. Bewegliche, drahtlose Kommunikationseinrichtung (10) zum Einsatz in einem drahtlosen Kommunikationsnetz (5, 5', 150, 150'), mit
einem GPS-Empfänger und einer drahtlosen Datenkommunikationsschnittstelle (14), wobei die drahtlose Datenkommunikationsschnittstelle (14) zum Empfangen wenigstens einer Positionsinformation, welche die Position wenigstens zwei anderer beweglicher Kommunikationseinrichtungen (20, 30, 40, 190, 210-250) zu einem bestimmten Gültigkeitszeitpunkt definiert, ausgebildet ist, wobei die Positionsinformation Angaben über die Positionskoordinaten und deren Genauigkeit enthält, eine Speichereinrichtung (11) zum Ablegen wenigstens eines Beobachtungswertes, der die relative Lage zwischen zwei beweglichen Kommunikationseinrichtungen (10, 20, 30, 40, 190, 210-250) zu dem bestimmten Gültigkeitszeitpunkt definiert, und
einer programmierbaren Steuereinrichtung (18), die dazu ausgebildet ist, anhand der in empfangenen Positionsinformationen der wenigstens zwei anderen beweglichen Kommunikationseinrichtungen (20, 30, 40, 190, 210-250) enthaltenen Genauigkeit abzuschätzen, ob die aktuelle mittels des GPS-Empfängers ermittelte Position der beweglichen, drahtlosen Kommunikationseinrichtung verbessert werden kann, wobei
die programmierbare Steuereinrichtung (18) dazu ausgebildet ist, die Positionskoordinaten der beweglichen, drahtlosen Kommunikationseinrichtung (10) sowie die Genauigkeit der Positionskoordinaten in Abhängigkeit von dem wenigstens einen Beobachtungswert und der wenigstens einen Positionsinformation der anderen beweglichen Kommunikationseinrichtung (20, 30, 40, 190, 210-250) zu bestimmen, und wobei
die programmierbare Steuereinrichtung (18) zum Ausführen wenigstens eines Optimierungsalgorithmus zum Schätzen der Positionskoordinaten der beweglichen, drahtlosen Kommunikationseinrichtung (10) und der Genauigkeit der Positionskoordinaten in Abhängigkeit von der Positionsinformation von wenigstens zwei anderen beweglichen Kommunikationseinrichtung (20, 30, 40, 190, 210-250), wenigstens zwei Beobachtungswerten und gegebenenfalls in Abhängigkeit von der Positionsinformation der beweglichen, drahtlosen Kommunikationseinrichtung (10) ausgebildet ist, wobei
der wenigstens eine Optimierungsalgorithmus auf einer freien Netzausgleichung basiert, und wobei die programmierbare Steuereinrichtung (18) zum Ausführen eines Algorithmus ausgebildet ist, welcher eine Transformation der Ergebnisse der Netzausgleichung in ein anderes vorgegebenes Zielkoordinatensystem durchführt.

13. Bewegliche, drahtlose Kommunikationseinrichtung nach Anspruch 12,
**gekennzeichnet durch**
wenigstens eine Messeinrichtung (17) zum Messen einer Messgröße, und
einer Auswerteeinrichtung (16), die dazu ausgebildet ist, in Abhängigkeit von der gemessenen Messgröße einen Beobachtungswert zu bestimmen, der die relative Lage zwischen zwei beweglichen Kommunikationseinrichtungen (10, 20; 30, 40) definiert, und/oder durch
einen GNSS-fähigen Empfänger (15), der zum Empfangen von Positionssignalen ausgebildet ist, um daraus eine Positionsinformation zu bestimmen, die Positionskoordinaten der beweglichen, drahtlosen Kommunikationseinrichtung und die Genauigkeit der Positionskoordinaten enthält.

14. Bewegliche, drahtlose Kommunikationseinrichtung nach Anspruch 12 oder 13,
**dadurch gekennzeichnet, dass**
die programmierbare Steuereinrichtung (18) dazu ausgebildet ist, die Positionskoordinaten der wenigstens zwei anderen beweglichen Kommunikationseinrichtungen (20, 30, 40, 190, 210-250) sowie die Genauigkeit der jeweiligen Positionskoordinaten zu bestimmen, und dass die drahtlose Datenkommunikationsschnittstelle (14) zum Senden der Positionskoordinaten und deren Genauigkeit zu der jeweiligen anderen beweglichen Kommunikationseinrichtung ausgebildet ist.

15. Bewegliche, drahtlose Kommunikationseinrichtung nach einem der Ansprüche 12 bis 14, **dadurch**
**gekennzeichnet, dass**
die programmierbare Steuereinrichtung (18) zum mehrmaligen Ausführen des Optimierungsalgorithmus und zur anschließenden Ausführung einer Blockausgleichung und/oder zur Ähnlichkeitstransformation der Positionsinformationen des ausgeglichenen Netzes in ein anderes Zielkoordinatensystem ausgebildet ist.

16. Bewegliche, drahtlose Kommunikationseinrichtung nach einem der Ansprüche 12 bis 15,
**dadurch gekennzeichnet, dass**
jedem Beobachtungswert ein Gültigkeitszeitpunkt zugeordnet ist und die Positionsinformationen jeweils einen Gültigkeitszeitpunkt enthalten, wobei die programmierbare Steuereinrichtung (18) dazu ausgebildet ist, die Positionskoordinaten der beweglichen, drahtlosen Kommunikationseinrichtung (10) und gegebenenfalls die Positionskoordinaten der wenigstens zwei anderen beweglichen Kommunikationseinrichtung (20, 30, 40, 190, 210-250) sowie die jeweilige die Genauigkeit der Positionskoordinaten und einen Gültigkeitszeitpunkt zu bestimmen.

17. Zentrale, drahtlose Kommunikationseinrichtung (120) zum Verbessern der in einer beweglichen Kommunikationseinrichtung mittels GPS-Empfänger bestimmten aktuellen Position wenigstens der beweglichen, drahtlosen Kommunikationseinrichtung, mit
einem Datenspeicher, und mit
einer drahtlosen Datenkommunikationsschnittstelle (122), die zum Empfangen von Positionsinformationen von wenigstens zwei anderen beweglichen Kommunikationseinrichtungen (10-40, 190, 210-250) ausgebildet ist, wobei die Positionsinformationen jeweils die Position der wenigstens zwei anderen beweglichen Kommunikationseinrichtungen (10-40, 190, 210-250) für einen bestimmten Gültigkeitszeitpunkt definieren und Angaben über die Positionskoordinaten und deren Genauigkeit enthält, und die ferner zum Empfangen von Beobachtungswerten, die jeweils die relative Lage zwischen zwei beweglichen Kommunikationseinrichtungen zu dem bestimmten Gültigkeitszeitpunkt definieren, ausgebildet ist, und mit
einer programmierbaren Steuereinrichtung (121), welche zum Ausführen wenigstens eines Optimierungsalgorithmus zum Schätzen der Positionskoordinaten der beweglichen, drahtlosen Kommunikationseinrichtung (10) und der Genauigkeit der Positionskoordinaten in Abhängigkeit von den Positionsinformationen der wenigstens zwei anderen beweglichen Kommunikationseinrichtungen (20, 30, 190, 210-250), von wenigstens zwei Beobachtungswerten und gegebenenfalls in Abhängigkeit von der Positionsinformation der beweglichen, drahtlosen Kommunikationseinrichtung (10) ausgebildet ist, wobei der wenigstens eine Optimierungsalgorithmus auf einer freien Netzausgleichung basiert, wobei die drahtlose Datenkommunikationsschnittstelle (122) zum Senden der Positionskoordinaten und deren Genauigkeit zur beweglichen, drahtlosen Kommunikationseinrichtung (10) ausgebildet ist, wobei die programmierbare Steuereinrichtung (121) dazu ausgebildet ist, nach Erhalt einer Aufforderung von der beweglichen, drahtlosen Kommunikationseinrichtung, aus den von den beweglichen Kommunikationseinrichtungen gesammelten und im Datenspeicher gespeicherten Positionsinformationen diejenigen beweglichen Kommunikationseinrichtungen zu finden, die der zentralen, drahtlosen Kommunikationseinrichtung helfen können, die Positionskoordinaten der beweglichen, drahtlosen Kommunikationseinrichtung zu verbessern, und wobei
die programmierbare Steuereinrichtung (121) zum Ausführen eines Algorithmus ausgebildet ist, welcher eine Transformation der Ergebnisse der Netzausgleichung in ein anderes vorgegebenes Zielkoordinatensystem durchführt.

18. Zentrale, drahtlose Kommunikationseinrichtung nach Anspruch 17,
**dadurch gekennzeichnet, dass**
die programmierbare Steuereinrichtung (121) dazu ausgebildet ist, die Positionskoordinaten der wenigstens zwei anderen beweglichen Kommunikationseinrichtungen (20, 30) sowie die Genauigkeit der jeweiligen Positionskoordinaten zu bestimmen, und dass
die drahtlose Datenkommunikationsschnittstelle (122) zum Senden der Positionskoordinaten und deren Genauigkeit zu der jeweiligen anderen beweglichen Kommunikationseinrichtung (20, 30) ausgebildet ist, und/oder dass
die programmierbare Steuereinrichtung (121) zum mehrmaligen Ausführen des wenigstens einen Optimierungsalgorithmus und zur anschließenden Ausführung einer Blockausgleichung und/oder einer Ähnlichkeitstransformation der Positionsinformationen in ein anderes Koordinatensystem ausgebildet ist.

19. Zentrale, drahtlose Kommunikationseinrichtung nach einem der Ansprüche 17 oder 18,
**dadurch gekennzeichnet, dass**
jedem Beobachtungswert ein Gültigkeitszeitpunkt zugeordnet ist und die Positionsinformationen jeweils einen Gültigkeitszeitpunkt enthalten, wobei die programmierbare Steuereinrichtung (121) dazu ausgebildet ist, die Positionskoordinaten der beweglichen, drahtlosen Kommunikationseinrichtung (10) und gegebenenfalls die Positionskoordinaten der wenigstens zwei anderen beweglichen Kommunikationseinrichtung (20, 30, 190, 210-250) sowie die jeweilige die Genauigkeit der Positionskoordinaten und einen Gültigkeitszeitpunkt zu bestimmen.

20. Computerprogramm enthaltend eine Vielzahl von Anweisungen, die in mehreren drahtlosen und beweglichen Kommunikationseinrichtungen (10-40, 120, 190, 210-250) speicherbar sind, wobei die Anweisungen, wenn sie von dem Mikroprozessor (18) der ersten beweglichen Kommunikationseinrichtung (10-40, 120, 190, 210-250) ausgelesen und verarbeitet werden, das Verfahren nach einem der Ansprüche 1 bis 11 ausführen.

## Claims

1. A method for execution in a processor of a mobile communication device of a wireless communication network for improving a current position of the mobile communication device (10) determined in the mobile communication device by means of a GPS receiver, comprising the following steps:
a0) estimating, based on an accuracy included in a position information provided for a second communication device and an accuracy included in a position information provided for at least one further communication device, whether the current position of a first mobile communication device can be improved,
a1) determining, for a specific validity time point, an observation value defining the relative location between the first mobile communication device (10; 190) and the second mobile communication device (20; 200),
a2) determining for the specific validity time point a further observation value defining the relative location between the first mobile communication device (10; 190) and the at least one further mobile communication device (30, 40, 190, 210-250), and/or determining for the specific validity time point a further observation value defining the relative location between the second mobile communication device (20; 200) and the at least one further mobile communication device (40) ;
b) providing a position information which specifies the position of the second communication device (20) at the determined validity time point, the position information including information about the position coordinates and the accuracy thereof, and
providing for the at least one further communication device (30, 40, 190, 210-250) a position information which specifies the position of the at least one further communication device (30, 40, 190, 210-250) for the specific validity time point, the position information including information about the position coordinates and the accuracy thereof;
c) executing an optimization algorithm for estimating the position coordinates of the first mobile communication device (10) and the accuracy of the position coordinates depending on the observation value determined in step a1), on the at least one further observation value determined in step a2), on the position information of the second communication device (20) provided in step b) and on the position information of the at least one further communication device (30, 40, 190, 210-250) provided in step b), wherein the optimization algorithm is based on a free network adjustment, and
performing a coordinate system transformation of the estimated position coordinates into another predefined target coordinate system, wherein the first, mobile communication device (10), the second communication device (20) and the at least one further communication device (30, 40, 190, 210-250) form a temporary geometric location network.

2. The method according to claim 1,
**characterized in that**
the at least one observation value determined in step a) is made available in the first, mobile communication device (10),
step b) comprises transmitting the position information specifying the position of the second communication device (20) from the second communication device (20) to the first, mobile communication device (10), and **in that** step c) is performed in the first, mobile communication device (10), or
**characterized in that**
the at least one observation value determined in step a) is made available in a central device (120), step b) comprises transmitting the position information specifying the position of the second communication device (20) from the second communication device to the central device (120), and **in that**
step c) is carried out in the central device (120), wherein the position coordinates determined in step c) and the accuracy thereof are transmitted to the first, mobile communication device (10).

3. The method according to any one of the preceding claims,
**characterized in that**
step a) comprises measuring at least one measurand for determining the at least one first observation value, and **in that**
the at least one first observation value comprises information about the spatial distance and/or the angle and/or the horizontal direction and/or the zenith angle between the first and the second mobile communication device, wherein
the at least one measurand can be measured in the first mobile communication device (10) and/or in the second mobile communication device (20) or in the at least one further mobile communication device (30, 40, 190, 210-250).

4. The method according to any one of the preceding claims,
**characterized in that**
each observation value is assigned a validity time point and each position information comprises a validity time point, and **in that**
in step c) the position coordinates, their accuracy and the associated validity time point are determined for the first, mobile communication device (10).

5. The method according to any one of the preceding claims,
**characterized in that**
in step c) further the position coordinates and the accuracy of the position coordinates of the second mobile communication device (20) and/or also the position coordinates and the accuracy of the position coordinates of the at least one further mobile communication device (30, 40, 190, 210-250), the position coordinates of which are not exactly determined, are determined by means of the free network adjustment, **in that**
the respective position coordinates and their accuracy are transmitted to the second mobile communication device (20) and/or to the at least one further mobile communication device (30, 40, 190, 210-250), and **in that**
in the second mobile communication device (20) and/or in the at least one further mobile communication device (30, 40, 190, 210-250), the respective position determined by means of the free network adjustment can be adopted as the current position.

6. The method according to any one of the preceding claims,
**characterized in that**
in step c) further the validity time point of the respective position coordinates can be determined, and/or that
step c) can be executed in response to a request command from the second mobile communication device (20) and/or the at least one further mobile communication device (30, 40, 190, 210-250) and/or the central device (120).

7. The method according to any one of the preceding claims, **characterized in that**
in the first, mobile communication device (10), a position information is determined by executing a position determination program which is based on a locating method, in particular a GNSS-based or a WLAN-based locating method, the position information comprising information about the position coordinates of the first, mobile communication device (10) and the accuracy of the position coordinates, and **in that** in step c), the position information of the first, mobile communication device (10) is also processed in the network adjustment.

8. The method according to any one of the preceding claims,
**characterized in that**
different optimization algorithms for estimating position coordinates and their accuracies are stored at least in the first, mobile communication device (10), and **in that**
an optimization algorithm to be executed is selected in response to a predetermined condition.

9. The method according to any one of the preceding claims,
**characterized in that**
the first, mobile communication device (10), the second mobile communication device (20) and the at least one further mobile communication device (30, 40, 190, 210-250) are selected under predeterminable criteria and/or that the position information in the second mobile communication device (20) and/or the at least one further mobile communication device (30, 40) is determined by executing a position determination program which is based on a locating method, in particular a GNSS-based or a WLAN-based locating method.

10. The method according to any one of the preceding claims,
**characterized in that**
the position information of the second mobile communication device (200) is transmitted from the second mobile communication device (200) to the first mobile communication device (190) by means of a near-field communication protocol, and **in that** the observation value is determined by the near-field communication protocol used.

11. The method according to any one of the preceding claims,
**characterized in that**
the position information and/or observation values and/or validity time points can be exchanged between the communication devices by means of a communication protocol for wireless data transmission, in particular the standardized Wi-Fi Direct protocol.

12. A mobile wireless communication device (10) for use in a wireless communication network (5, 5', 150, 150'), comprising
a GPS receiver and a wireless data communication interface (14), the wireless data communication interface (14) being adapted to receive at least one position information specifying the position of at least two other mobile communication devices (20, 30, 40, 190, 210-250) at a specific validity time point, the position information including information on the position coordinates and the accuracy of the same, a memory device (11) for storing at least one observation value defining the relative location between two mobile communication devices (10, 20, 30, 40, 190, 210-250) at the specific validity time point, and
a programmable control device (18) adapted to estimate whether the current position of the mobile wireless communication device determined by means of the GPS receiver can be improved based on the accuracy included in received position information of the at least two other mobile communication devices (20, 30, 40, 190, 210-250), wherein
the programmable control device (18) is adapted to determine the position coordinates of the mobile wireless communication device (10) and the accuracy of the position coordinates depending on the at least one observation value and the at least one position information of the other mobile communication device (20, 30, 40, 190, 210-250), and wherein
the programmable control device (18) is adapted to execute at least one optimization algorithm for estimating the position coordinates of the mobile wireless communication device (10) and the accuracy of the position coordinates depending on the position information of at least two other mobile communication devices (20, 30, 40, 190, 210-250), at least two observation values and optionally depending on the position information of the mobile wireless communication device (10), wherein
the at least one optimization algorithm is based on a free network adjustment, and wherein the programmable control device (18) is adapted to execute an algorithm which performs a transformation of the results of the network adjustment into another predetermined target coordinate system.

13. The mobile wireless communication device according to claim 12,
**characterized by**
at least one measuring device (17) for measuring a measurand, and
an evaluation device (16) which is designed to determine, depending on the measured measurand, an observation value defining the relative location between two mobile communication devices (10, 20; 30, 40), and/or by
GNSS-enabled receiver (15) adapted to receive position signals to determine therefrom a position information including position coordinates of the mobile wireless communication device and the accuracy of the position coordinates.

14. The mobile wireless communication device according to claim 12 or 13,
**characterized in that**
the programmable control device (18) is adapted to determine the position coordinates of the at least two other mobile communication devices (20, 30, 40, 190, 210-250) and the accuracy of the respective position coordinates, and **in that**
the wireless data communication interface (14) is adapted to transmit the position coordinates and the accuracy thereof to the respective other mobile communication device.

15. The mobile wireless communication device according to any one of claims 12 to 14, **characterized in that** the programmable control device (18) is adapted to execute the optimization algorithm a plurality of times and to subsequently perform block adjustment and/or similarity transformation of the position information of the adjusted network into another target coordinate system.

16. The mobile wireless communication device according to any one of claims 12 to 15,
**characterized in that**
each observation value is associated with a validity time point and the position information each includes a validity time point, wherein
the programmable control device (18) is adapted to determine the position coordinates of the mobile wireless communication device (10) and, if applicable, the position coordinates of the at least two other mobile communication devices (20, 30, 40, 190, 210-250) as well as the respective accuracy of the position coordinates and a validity time point.

17. A central wireless communication device (120) for improving the current position, determined in a mobile communication device by means of a GPS receiver, of at least the mobile wireless communication device , comprising
a data memory; and
a wireless data communication interface (122) adapted to receive position information from at least two other mobile communication devices (10-40, 190, 210-250), the position information specifying the position of each of the at least two other mobile communication devices (10-40, 190, 210-250) for a specific validity time point and including information about the position coordinates and the accuracy thereof, and further adapted to receive observation values each defining the relative location between two mobile communication devices at the specific validity time point; and
a programmable control device (121) adapted to execute at least one optimization algorithm for estimating the position coordinates of the mobile wireless communication device (10) and the accuracy of the position coordinates depending on the position information of the at least two other mobile communication devices (20, 30, 190, 210-250), on at least two observation values and optionally depending on the position information of the mobile wireless communication device (10), wherein
the at least one optimization algorithm is based on a free network adjustment, wherein
the wireless data communication interface (122) is adapted to send the position coordinates and their accuracy to the mobile wireless communication device (10), wherein
the programmable control device (121) is adapted, upon receiving a request from the mobile wireless communication device, to find, from the position information collected from the mobile communication devices and stored in the data memory, those mobile communication devices that can help the central wireless communication device to improve the position coordinates of the mobile wireless communication device, and wherein
the programmable control device (121) is adapted to execute an algorithm that performs a transformation of the results of the network adjustment into another predetermined target coordinate system.

18. The central wireless communication device according to claim 17,
**characterized in that**
the programmable control device (121) is adapted to determine the position coordinates of the at least two other mobile communication devices (20, 30) and the accuracy of the respective position coordinates, and **in that**
the wireless data communication interface (122) is adapted to transmit the position coordinates and the accuracy thereof to the respective other mobile communication device (20, 30), and/or that the programmable control device (121) is adapted to execute the at least one optimization algorithm a plurality of times and to subsequently execute a block adjustment and/or a similarity transformation of the position information into another coordinate system.

19. The central wireless communication device according to any one of claims 17 or 18,
**characterized in that**
a validity time point is assigned to each observation value and the position information each includes a validity time point, wherein
the programmable control device (121) is adapted to determine the position coordinates of the mobile wireless communication device (10) and, if applicable, the position coordinates of the at least two other mobile communication devices (20, 30, 190, 210-250), as well as the respective accuracy of the position coordinates and a validity time point.

20. A computer program comprising
a plurality of instructions storable in a plurality of wireless and mobile communication devices (10-40, 120, 190, 210-250), wherein the instructions, when read and processed by the microprocessor (18) of the first mobile communication device (10-40, 120, 190, 210-250), perform the method of any one of claims 1 to 11.

## Revendications

1. Procédé à exécuter dans un processeur d'un dispositif de communication mobile d'un réseau de communication sans fil pour améliorer une position en cours déterminée du dispositif de communication (10) mobile dans le dispositif de communication mobil'au moyen d'un récepteur GPS, avec les étapes suivantes :
a0) évaluer, à l'aide d'une exactitude qui est contenue dans une information de position fournie pour un deuxième dispositif de communication, et d'une exactitude qui est contenue dans une information de position fournie pour au moins un autre dispositif de communication, si la position en cours d'un premier dispositif de communication mobile peut être améliorée,
a1) déterminer, pour un moment de validité déterminé, une valeur d'observation qui définit la situation relative entre le premier dispositif de communication (10 ; 190) mobile et le deuxième dispositif de communication (20 ; 200) mobile,
a2) déterminer, pour le moment de validité déterminé, une autre valeur d'observation qui définit la situation relative entre le premier dispositif de communication (10 ; 190) mobile et l'au moins un autre dispositif de communication (30, 40, 190, 210-250) mobile, et/ou déterminer, pour le moment de validité déterminé, une autre valeur d'observation qui définit la situation relative entre le deuxième dispositif de communication (20 ; 200) mobile et l'au moins un autre dispositif de communication (40) mobile ;
b) fournir une information de position, laquelle fixe la position du deuxième dispositif de communication (20) au moment de validité déterminé, où l'information de position contient des indications sur les coordonnées de position et leur exactitude, et
fournir, pour l'au moins un autre dispositif de communication (30, 40, 190, 210-250), une information de position, laquelle fixe la position de l'au moins un autre dispositif de communication (30, 40, 190, 210-250) pour le moment de validité déterminé, où l'information de position contient des indications sur les coordonnées de position et leur exactitude ;
c) exécuter un algorithme d'optimisation pour estimer les coordonnées de position du premier dispositif de communication (10) mobile et l'exactitude des coordonnées de position en fonction de la valeur d'observation déterminée à l'étape a1), de l'au moins une autre valeur d'observation déterminée à l'étape a2), de l'information de position du deuxième dispositif de communication (20) fournie à l'étape b), et de l'information de position de l'au moins un autre dispositif de communication (30, 40, 190, 210-250) fournie à l'étape b), où l'algorithme d'optimisation est basé sur un libre équilibrage de réseau, et
réaliser une transformation de système de coordonnées des coordonnées de position estimées en un autre système de coordonnées cible prédéfini,
dans lequel le premier dispositif de communication (10) mobile, le deuxième dispositif de communication (20) mobile et l'au moins un autre dispositif de communication (30, 40, 190, 210-250) constituent un réseau de situation géométrique temporaire.

2. Procédé selon la revendication 1
**caractérisé en ce que**
l'au moins une valeur d'observation déterminée à l'étape a) est rendue disponible dans le premier dispositif de communication (10) mobile,
l'étape b) contient la transmission de l'information de position, laquelle fixe la position du deuxième dispositif de communication (20), depuis le deuxième dispositif de communication (20) vers le premier dispositif de communication (10) mobile, et **en ce que**
l'étape c) est exécutée dans le premier dispositif de communication (10) mobile, ou
**caractérisé en ce que**
l'au moins une valeur d'observation déterminée à l'étape a) est rendue disponible dans un dispositif central (120),
l'étape b) contient la transmission de l'information de position, laquelle fixe la position du deuxième dispositif de communication (20), depuis le deuxième dispositif de communication vers le dispositif central (120), et **en ce que**
l'étape c) est exécutée dans le dispositif central (120), où les coordonnées déterminées à l'étape c) et leur exactitude sont transmises vers le premier dispositif de communication (10) mobile.

3. Procédé selon l'une des revendications précédentes,
**caractérisé en ce que**
l'étape a) contient la mesure d'au moins une grandeur de mesure pour déterminer l'au moins une première valeur d'observation, et **en ce que**
l'au moins une première valeur d'observation contient des indications sur la distance spatiale et/ou l'angle et/ou la direction horizontale et/ou l'angle zénithal entre le premier et le deuxième dispositif de communication mobile, dans lequel
l'au moins une grandeur de mesure peut être mesurée dans le premier dispositif de communication (10) mobile et/ou dans le deuxième dispositif de communication (20) mobile et/ou dans l'au moins un autre dispositif de communication (30, 40, 190, 210-250) mobile.

4. Procédé selon l'une des revendications précédentes,
**caractérisé en ce que**
un moment de validité est attribué à chaque valeur d'observation et chaque information de position contient un moment de validité, et **en ce que**
à l'étape c) pour le premier dispositif de communication (10) mobile sont déterminés les coordonnées de position, leur exactitude, et le moment de validité correspondant.

5. Procédé selon l'une des revendications précédentes,
**caractérisé en ce que**
à l'étape c) sont en outre déterminées les coordonnées de position et l'exactitude des coordonnées de position du deuxième dispositif de communication (20) mobile et/ou de l'au moins un autre dispositif de communication (30, 40, 190, 210-250) mobile, dont les coordonnées de position ne sont pas exactement déterminées, également leurs coordonnées de position et l'exactitude des coordonnées de position au moyen du libre équilibrage de réseau, **en ce que**
les coordonnées de position respectives et leur exactitude sont transmises vers le deuxième dispositif de communication (20) mobile et/ou vers l'au moins un autre dispositif de communication (30, 40, 190, 210-250) mobile, et **en ce que**
dans le deuxième dispositif de communication (20) mobile et/ou dans l'au moins un autre dispositif de communication (30, 40, 190, 210-250) mobile, la position respective déterminée au moyen du libre équilibrage de réseau peut être reprise en tant que position en cours.

6. Procédé selon l'une des revendications précédentes,
**caractérisé en ce que**
à l'étape c) le moment de validité des coordonnées de position respectives peut en outre être déterminé, et/ou **en ce que**
l'étape c) peut être exécutée en réponse à une instruction de requête du deuxième dispositif de communication (20) mobile et/ou de l'au moins un autre dispositif de communication (30, 40, 190, 210-250) mobile et/ou du dispositif central (120).

7. Procédé selon l'une des revendications précédentes,
**caractérisé en ce que**
dans le premier dispositif de communication (10) mobile, une information de position est établie en exécutant un programme de détermination de position, lequel est basé sur un procédé de localisation, en particulier un procédé de localisation basé sur un GNSS ou basé sur un WLAN, où l'information de position contient des indications sur les coordonnées de position du premier dispositif de communication (10) mobile et l'exactitude des coordonnées de position, et **en ce que**
à l'étape c) l'information de position du premier dispositif de communication (10) mobile est également traitée dans l'équilibrage de réseau.

8. Procédé selon l'une des revendications précédentes,
**caractérisé en ce que**
au moins dans le premier dispositif de communication (10) mobile sont mémorisés différents algorithmes d'optimisation pour estimer des coordonnées de position et leur exactitude, et **en ce que**
un algorithme d'optimisation à exécuter est sélectionné en réponse à une condition prédéterminée.

9. Procédé selon l'une des revendications précédentes,
**caractérisé en ce que**
le premier dispositif de communication (10) mobile, le deuxième dispositif de communication (20) mobile et l'au moins un autre dispositif de communication (30, 40, 190, 210-250) mobile sont sélectionnés selon des critères prédéterminés, et/ou **en ce que** l'information de position dans le deuxième dispositif de communication (20) mobile et/ou l'au moins un autre dispositif de communication (30, 40) mobile est établie en exécutant un programme de détermination de position, lequel est basé sur un procédé de localisation, en particulier un procédé de localisation basé sur un GNSS ou basé sur un WLAN.

10. Procédé selon l'une des revendications précédentes,
**caractérisé en ce que**
l'information de position du deuxième dispositif de communication (200) mobile est transmise au moyen d'un protocole de communication en champ proche depuis le deuxième dispositif de communication (200) mobile vers le premier dispositif de communication (190) mobile, et **en ce que** la valeur d'observation est fixée par le protocole de communication en champ proche utilisé.

11. Procédé selon l'une des revendications précédentes,
**caractérisé en ce que**
les informations de position et/ou valeurs d'observation et/ou moments de validité entre les dispositifs de communication peuvent être échangés au moyen d'un protocole de communication pour la transmission de données sans fil, en particulier du protocole Wi-Fi-Direct standardisé.

12. Dispositif de communication (10) mobile sans fil destiné à être utilisé dans un réseau de communication (5, 5', 150, 150') sans fil, avec
un récepteur GPS et une interface de communication de données (14) sans fil, où l'interface de communication de données (14) sans fil est conçue pour recevoir au moins une information de position, laquelle définit la position d'au moins deux autres dispositifs de communication (20, 30, 40, 190, 210-250) mobiles à un moment de validité déterminé, où l'information de position contient des indications sur les coordonnées de position et leur exactitude,
un dispositif de mémorisation (11) pour enregistrer au moins une valeur d'observation qui définit la situation relative entre deux dispositifs de communication (10, 20, 30, 40, 190, 210-250) mobiles au moment de validité déterminé, et
un dispositif de commande (18) programmable qui est conçu pour évaluer, à l'aide de l'exactitude contenue dans des informations de position reçues des au moins deux autres dispositifs de communication (20, 30, 40, 190, 210-250) si la position en cours, établie au moyen du récepteur GPS, du dispositif de communication mobile sans fil peut être améliorée, où
le dispositif de commande (18) programmable est conçu pour déterminer les coordonnées de position du dispositif de communication (10) mobile sans fil ainsi que l'exactitude des coordonnées de position en fonction de l'au moins une valeur d'observation et de l'au moins une information de position de l'autre dispositif de communication (20, 30, 40, 190, 210-250) mobile, et où
le dispositif de commande (18) programmable est conçu pour exécuter au moins un algorithme d'optimisation afin d'estimer les coordonnées de position du dispositif de communication (10) mobile sans fil et l'exactitude des coordonnées de position en fonction de l'information de position d'au moins deux autres dispositifs de communication (20, 30, 40, 190, 210-250) mobiles, au moins deux valeurs d'observation et le cas échéant en fonction de l'information de position du dispositif de communication (10) mobile sans fil, où
l'au moins un algorithme d'optimisation est basé sur un libre équilibrage de réseau, et où le dispositif de commande (18) programmable est conçu pour exécuter un algorithme, lequel réalise une transformation des résultats de l'équilibrage de réseau en un autre système de coordonnées cible prédéfini.

13. Dispositif de communication mobile sans fil selon la revendication 12,
**caractérisé par**
au moins un dispositif de mesure (17) pour mesurer une grandeur de mesure, et
un dispositif d'analyse (16) qui est conçu pour, en fonction de la grandeur de mesure mesurée, déterminer une valeur d'observation qui définit la situation relative entre deux dispositifs de communication (10, 20 ; 30, 40) mobiles, et/ou par
un récepteur compatible avec un GNSS (15) qui est conçu pour recevoir des signaux de position pour, à partir de ceux-ci, déterminer une information de position qui contient des coordonnées de position du dispositif de communication mobile sans fil et l'exactitude des coordonnées de position.

14. Dispositif de communication mobile sans fil selon la revendication 12 ou 13,
**caractérisé en ce que**
le dispositif de commande (18) programmable est conçu pour déterminer les coordonnées de position des au moins deux autres dispositifs de communication (20, 30, 40, 190, 210-250) mobiles ainsi que l'exactitude des coordonnées de position respectives, et **en ce que** l'interface de communication de données (14) sans fil est conçue pour envoyer les coordonnées de position et leur exactitude vers l'autre dispositif de communication mobile respectif.

15. Dispositif de communication mobile sans fil selon l'une des revendications 12 à 14,
**caractérisé en ce que**
le dispositif de commande (18) programmable est conçu pour l'exécution renouvelée de l'algorithme d'optimisation puis pour la réalisation d'un équilibrage de bloc et/ou d'une transformation homothétique des informations de position du réseau équilibré en un autre système de coordonnées cible.

16. Dispositif de communication mobile sans fil selon l'une des revendications 12 à 15,
**caractérisé en ce que**
un moment de validité est attribué à chaque valeur d'observation et les informations de position contiennent respectivement un moment de validité, où
le dispositif de commande (18) programmable est conçu pour déterminer les coordonnées de position du dispositif de communication (10) mobile sans fil et le cas échéant les coordonnées de position des au moins deux autres dispositifs de communication (20, 30, 40, 190, 210-250) mobiles ainsi que l'exactitude respective des coordonnées de position et un moment de validité.

17. Dispositif de communication central (120) sans fil destiné à améliorer la position en cours, déterminée dans un dispositif de communication mobile au moyen d'un récepteur GPS, au moins du dispositif de communication mobile sans fil, avec
une mémoire de données, et avec
une interface de communication de données (122) sans fil qui est conçue pour recevoir des informations de position depuis au moins deux autres dispositifs de communication (10-40, 190, 210-250) mobiles, où les informations de position définissent respectivement la position des au moins deux autres dispositifs de communication (10-40, 190, 210-250) mobiles pour un moment de validité déterminé et contiennent des indications sur les coordonnées de position et leur exactitude, et qui est en outre conçue pour recevoir des observations de données qui définissent respectivement la situation relative entre deux dispositifs de communication mobiles au moment de validité déterminé, et avec
un dispositif de commande (121) programmable, lequel est conçu pour exécuter au moins un algorithme d'optimisation afin d'estimer les coordonnées de position du dispositif de communication (10) mobile sans fil et l'exactitude des coordonnées de position en fonction des informations de position des au moins deux autres dispositifs de communication (20, 30, 190, 210-250) mobiles, d'au moins deux valeurs d'observation et le cas échéant en fonction de l'information de position du dispositif de communication (10) mobile sans fil, où l'au moins un algorithme d'optimisation est basé sur un libre équilibrage de réseau, où
l'interface de communication de données (122) sans fil est conçue pour envoyer les coordonnées de position et leur exactitude vers le dispositif de communication (10) mobile sans fil, où
le dispositif de commande (121) programmable est conçu pour, après obtention d'une invitation depuis le dispositif de communication mobile sans fil, trouver parmi les informations de position collectées depuis les dispositifs de communication mobiles et mémorisées dans la mémoire de données, les dispositifs de communication mobiles qui peuvent aider le dispositif de communication central sans fil à améliorer les coordonnées de position du dispositif de communication mobile sans fil, et où
le dispositif de commande (121) programmable est conçu pour exécuter un algorithme, lequel réalise une transformation des résultats de l'équilibrage de réseau en un autre système de coordonnées cible prédéfini.

18. Dispositif de communication central sans fil selon la revendication 17,
**caractérisé en ce que**
le dispositif de commande (121) programmable est conçu pour déterminer les coordonnées de position des au moins deux autres dispositifs de communication (20, 30) mobiles ainsi que l'exactitude des coordonnées de position respectives, et **en ce que**
l'interface de communication de données (122) sans fil est conçue pour envoyer les coordonnées de position et leur exactitude vers l'autre dispositif de communication (20, 30) mobile respectif, et/ou **en ce que**
le dispositif de commande (121) programmable est conçu pour l'exécution renouvelée de l'au moins un algorithme d'optimisation puis pour la réalisation d'un équilibrage de bloc et/ou d'une transformation homothétique des informations de position en un autre système de coordonnées.

19. Dispositif de communication central sans fil selon l'une des revendications 17 ou 18,
**caractérisé en ce que**
un moment de validité est attribué à chaque valeur d'observation et les informations de position contiennent respectivement un moment de validité, où
le dispositif de commande (121) programmable est conçu pour déterminer les coordonnées de position du dispositif de communication (10) mobile sans fil et le cas échéant les coordonnées de position des au moins deux autres dispositifs de communication (20, 30, 190, 210-250) mobiles ainsi que l'exactitude respective des coordonnées de position et un moment de validité.

20. Programme informatique contenant
une pluralité d'instructions qui peuvent être mémorisées dans plusieurs dispositifs de communication (10-40, 120, 190, 210-250) mobiles et sans fil, où les instructions, lorsqu'elle sont lues et traitées par le microprocesseur (18) du premier dispositif de communication (10-40, 120, 190, 210-250) mobile, exécutent le procédé selon l'une des revendications 1 à 11.
